# EUROPEAN PATENT SPECIFICATION

(11) **EP 2 213 481 B1**
(45) Date of publication and mention of the grant of the patent: **23.03.2016**
(21) Application number: 08840558.4
(22) Date of filing: 17.10.2008
(51) Int. Cl.: B60C 11/00, B29D 30/60, B60C 9/18, B60C 9/22

(54) **PNEUMATIC TIRE FOR TWO-WHEELED VEHICLE**
LUFTREIFEN FÜR EIN ZWEIRÄDRIGES FAHRZEUG
PNEUMATIQUE POUR VÉHICULE À DEUX ROUES

(30) Priority: 19.10.2007 JP 2007272244
(43) Date of publication of application: 04.08.2010
(73) Proprietor: Kabushiki Kaisha Bridgestone, Tokyo 104-8340 (JP)
(72) Inventor: KATAYAMA, Shinsaku, Kodaira-shi Tokyo 187-8531 (JP); KOIDE, Masahumi, Kodaira-shi Tokyo 187-8531 (JP); ISHIYAMA, Makoto, Kodaira-shi Tokyo 187-8531 (JP)
(74) Representative: Oxley, Robin John George
(86) International application number: PCT/JP2008/068854
(87) International publication number: WO 2009/051224

(56) References cited:
- EP-A1- 1 632 364
- JP-A- 4 197 805
- JP-A- 7 108 805
- JP-A- 8 072 505
- JP-A- 9 136 504
- JP-A- 63 134 311
- JP-A- 63 240 404
- JP-A- 2004 010 005
- JP-A- 2007 131 112
- JP-A- 2007 131 228

## Description

### TECHNICAL FIELD

The present invention relates to a pneumatic tire for a two-wheeled vehicle (motorcycle) and more particularly to improving running stability at cornering, preventing tread wear in the shoulder regions, and ensuring uniformity of wear on the left side and the right side of a pneumatic tire for a two-wheeled vehicle which is subject to differences in frequency of left-hand cornering and right-hand cornering.

### BACKGROUND ART

Tires of motorcycles are characterized by their effecting a cornering (turning) of the vehicle with a tilt of the vehicle body. As a consequence, the part of the tire in contact with the road surface shifts along with the tilt of the vehicle body. In other words, motorcycle tires have a characteristic such that the tire center region is used in straight running while the tire shoulder region is used at cornering.

Also, when the vehicle body is upright, the vehicle speed is high and forces, such as braking force and driving force, are at work in the fore-aft direction (equatorial direction of the tire). When the vehicle is cornering with the vehicle body leaning, considerable lateral forces work, so that the shoulder region of the tire is required to provide a good lateral grip corresponding to the lateral force. That is, in order to have a two-wheeled vehicle corner at high speed, it is necessary to lean the vehicle body significantly to balance it against the centrifugal force, which increases with the cornering speed, and the tire must grip the road surface against the centrifugal force.

If the tire does not provide sufficient grip when the vehicle body is tilted significantly, then the two-wheeled vehicle cannot accomplish cornering at high speeds. In other words, the grip of the shoulder region has a material effect on the cornering performance of the vehicle. Hence, a rubber providing excellent grip is used in the shoulder regions of the tire.

Also, commercially available tires often have rubber of high abrasion resistance used in the tire center region in consideration of high frequency of straight running. Racing and other sports-specific tires, on the other hand, have rubber less likely to heat up disposed in the tire center region because the straight running speed is extremely high. Or otherwise they may be of such design that the rubber in the tire center region is of a two-tier structure in which a rubber less likely to heat up is disposed inside and a rubber capable of providing good grip outside.

The heating of the tread poses a problem in the tire shoulder regions as well. The greater the distortion that works repeatedly on the rubber and the faster the rotational speed of the tire, the more significant the heating will be. Particularly in a motorcycle race or when an intense riding is done by an ordinary consumer, there occur great force inputs in the shoulder regions of the tire. Furthermore, the heating of the tread rubber in the shoulder regions is significant due to the cornering done by the vehicle body at relatively high speeds.

Rubber has a property of softening under heat. Therefore, if the tread rigidity drops due to the softening of the rubber, then the cornering performance will drop, the wear in the shoulder regions will progress, and the rubber in the shoulder region will deteriorate.

On the other hand, the loss tangent (tan δ), which is one of the properties of rubber, has a very important effect on the magnitude of force with which the rubber grips the road surface (or the friction coefficient between the rubber and the road surface). The rubber with a large tan δ is prone to much energy loss resulting from the deformation of the rubber and yet provides excellent grip. However, because of the large energy loss, the rubber itself may characteristically heat up easily when it is subjected to deformation repeatedly. Also, a heated rubber has the characteristic of becoming soft. And if the heating of the tread rubber of the tire is excessive, then the rigidity of the tread may sometimes drop and the steering stability may decline. In other words, the rubber having a large tan δ excels in gripping performance, but is prone to heating and softens easily when used repeatedly.

In particular, in a motorcycle race or when an intense riding is done by an ordinary consumer, the tread rubber in the shoulder regions gets heated during the running and the cornering performance drops. Moreover, the heating softens the rubber, thereby lowering the tread rigidity, which makes the tire more susceptible to slips. As a result, wear in the shoulder regions may be accelerated, and the rubber in the shoulder regions may become deteriorated.

With conventional tires for two-wheeled vehicles, the rubber used in the tire shoulder regions has been mainly one having a large loss tangent (tan δ) . It has been the rubber capable of providing good grip, or a high friction coefficient, with main emphasis placed on the improvement of grip. For example, Reference 1 discloses a tire for a two-wheeled vehicle which uses a rubber of tan δ in the range of 0.4 to 0.8 in the shoulder regions to ensure grip performance and a rubber of tan δ in the range of 0.05 to 0.3 in the tire center region to ensure low fuel consumption. Also, Reference 2 discloses a tire for a two-wheeled vehicle which has a wide plate rubber member encircling the tire in the tire center region and narrow and long rubber strips wound spirally in the circumferential direction in the tire shoulder regions. The two-wheeled vehicle tire also has a rubber of tan δ in the range of 0.2 to 0.4 disposed in the shoulder regions and a rubber of tan δ being 80% or less of the tan δ of the rubber in the shoulder regions disposed in the tire center region.

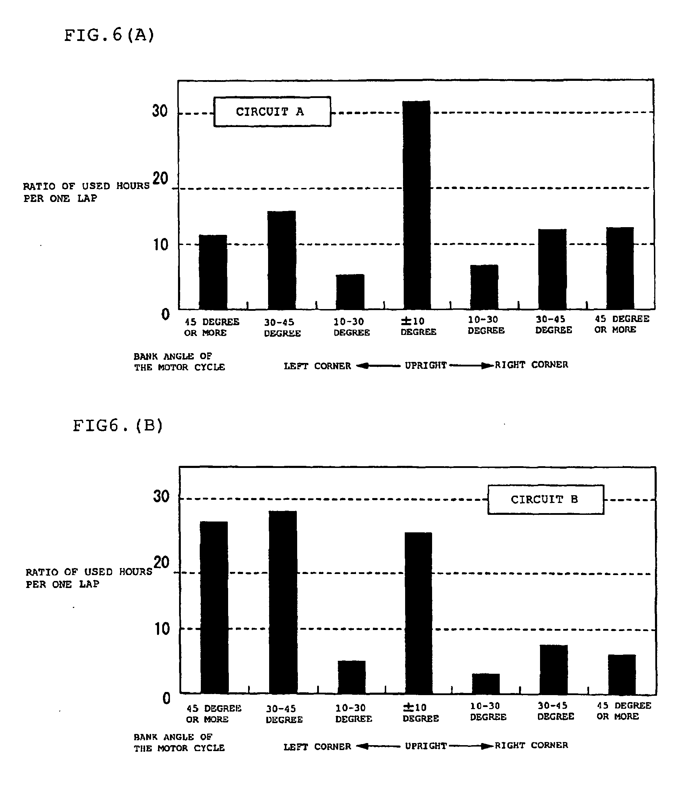

On the other hand, race circuits where motorcycle races are held are not only those with nearly equal frequencies of right-hand cornering and left-hand cornering, but also those with different frequencies of them. FIG. 6A is a graph of frequencies of use of bank angle (camber angle) within a lap of Circuit A which has nearly equal frequencies of right-hand cornering and left-hand cornering. The graph shows, on the vertical axis, the time ratios in percentages of respective camber angles used during a lap of the circuit. FIG. 6B is a graph of Circuit B which has different frequencies of right-hand cornering and left-hand cornering. For example, as shown in FIG. 6B, a left-hand turning (counterclockwise) circuit has more left-hand corners, and a right-hand turning (clockwise) circuit has more right-hand corners. It should be understood here that the left and right of the tire herein are those of the tire mounted on a two-wheeled vehicle facing the direction of travel.

There are also race courses with such peculiarity that all high-speed corners, where the vehicles can corner at high speeds, are right-hand corners and all low-speed corners are left-hand corners. When a motorcycle runs along a high-speed corner, great centrifugal forces may work on it with the tires subjected to the input of severe forces. As a result, there will be more tire wear at high-speed corners. Also, at high-speed corners, the rubber can easily heat up from the severe input of forces into the tire and also from the high rotational speed of the tire.

Thus, there may be circuits that require different performances in right-hand cornering and left-hand cornering.
Reference 1: Japanese Unexamined Patent Application Publication No. 60-94804
Reference2: Japanese Unexamined Patent Application Publication No. 2006-256385

Attention is also drawn to the disclosure of JP-072505 which discloses a known pneumatic tire for a two-wheeled vehicle.

### DISCLOSURE OF THE INVENTION

### PROBLEMS TO BE SOLVED BY THE INVENTION

However, if rubber of a large tan δ is disposed in the tire shoulders as with conventional tires for two-wheeled vehicles, there may develop performance problems with steering stability and abrasion resistance in the shoulder region because the rubber can heat up easily, although it may be possible to secure sufficient grip in the initial state. Further, there may arise a problem of a loss of grip as wear in the shoulders progresses or the rubber in the shoulder regions deteriorates from repeated use.

Thus, a conceivable solution is to control the heating in the shoulder regions. Yet, the side in the shoulder region closer to the tread edge (region A to be discussed later) is used only when the vehicle body is nearly at a maximum tilt (camber angle being 45 to 55 degrees). Hence, if the heating of even this portion is controlled, there will be less than adequate warming of the rubber on an actual vehicle, which will give rise to a problem of lowered steering stability due to insufficient grip.

Also, when the two-wheeled vehicle tire is used with different frequencies of right-hand cornering and left-hand cornering, the shoulder wear on the more frequently used side progresses more quickly. This leads to a problem of shortened tire life because sufficient grip is not obtained and moreover uniformity of wear in the left and right shoulders will be lost.

Hereinbelow, problems resulting from a rubber of a large tan δ disposed in the tire shoulders are explained in detail.

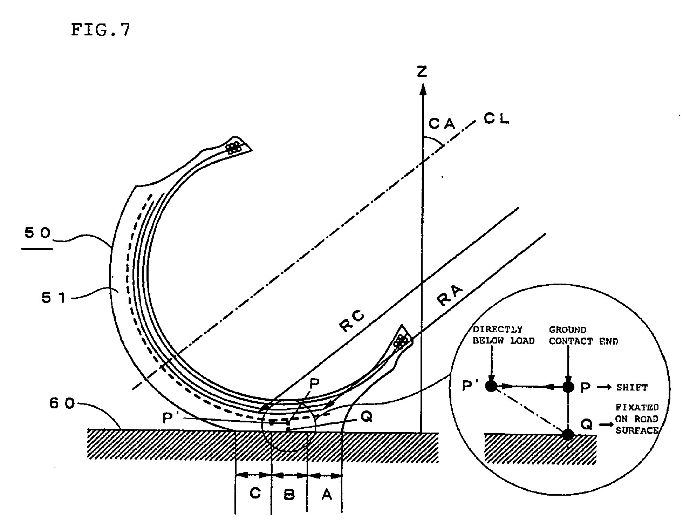

The cornering performance of a motorcycle tire when the cycle body is tilted significantly depends on the grip that occurs when an edge of one side of the tire tread makes contact with the ground surface. FIG. 7 illustrates a cross section of a tire 50 rotating in contact with the ground at a camber angle (denoted by CA in the following) of 50 degrees. The CA is an angle formed between the wheel center line CL and the Z axis, which is perpendicular to the road surface 60, in a vertical cross section of the tire 50.

When a two-wheeled vehicle performs a cornering with the vehicle body tilted significantly, that is, when the CA of the tire 50 is 45 to 50 degrees, about 1/4 of the total width (tread width) of the tread 51 of the tire 50 is in contact with the ground. Let us now divide the 1/4 region in contact with the ground into three equal parts, designate them as region A, region B, and region C from the side closer to the tread edge, and consider the deformation of the tread 51 in the respective regions in an axial (width direction) cross section of the tire 50. This is because the tread deformation gives rise to lateral forces in the tire 50. And the lateral deformation of the tread 51 gives rise to camber thrusts (lateral forces).

It should be noted that the ground contact shape of the tread when the tire is rotating at a CA of 50 degrees is an ellipse with a part missing or a half moon.

A description will be given here of the deformation in the tread width (axial) direction of region B, which is the central region of the contact area.

Let Q represent a point on the tread surface in region B and in contact with the road surface, and let P represent a point radially inward of point Q and at the deepest position of the tread. Then, when the tire 50 is rolling in contact with the ground, the point Q in contact with the road surface 60 gets fixated thereto as the surface of the tread 51 comes in contact with the road surface 60, and moves linearly in the direction of the road surface 60 extending perpendicularly from the sheet surface of the figure, i.e., in the direction of travel of the tire 50. On the other hand, the point P, which is a point at the deepest position of the tread, draws an arched curve because the tire 50 rolls with a tilt of CA (The straight line showing the locus of the point P in the figure is an orthogonal projection of the curve. And the right side of the figure is the vehicle-body side, and the left side is the non-vehicle-body side.) Due to the difference in the movement of the points P and Q, the tread 51 receives lateral sheer forces in the non-vehicle-body direction. Also, the lateral sheer force reaches its maximum when the point Q is positioned directly below the load, that is, at the circumferential center of the contact area. These lateral sheer forces have the tread 51 undergo lateral deformation. And consequently, there occur forces in the opposite direction of the lateral sheer forces, namely, camber thrusts (lateral forces) in the vehicle-body direction, in the tire 50, which serve as lateral grips at the time of cornering.

The mechanism of the occurrence of camber thrusts is such that the longer the ground contact length (circumferential or equatorial length of the contact area) is, the greater the shearing of the tread 51 will be resulting from the wider difference between the loci of the point P and the point Q. Conversely, the shorter the ground contact length is, the smaller the amount of shearing (shearing in the lateral or axial direction) of the tread 51 will be.

When the ground contact shape is an ellipse with a part missing, the ground contact length is the longest in region B, a little shorter in region A, and the shortest in region C of the three regions. Accordingly, the tread is subject to the greatest shearing in region B, a little less shearing in region A, and the least shearing in region C. On the other hand, when the ground contact shape is a half moon, the ground contact length is the longest in region A and region B and much shorter in region C. Accordingly, the tread is subject to great shearing in region A and region B and much less shearing in region C.

In other words, it is the regions A and B that gain much lateral force from the shearing when the CA is as large as 45 to 50 degrees.

Observation of the tilt angle (bank angle or CA) of a motorcycle indicates that the motorcycle does not tilt with the CA surpassing 45 to 50 degrees. That is, region A is the region which comes into contact with the ground only when the motorcycle is at a maximum angle of tilting. Region B is also the region mainly used when the motorcycle is at a significant tilt. Region C, on the other hand, is the region often used when the motorcycle has slightly recovered from a significant tilt, i.e., when the CA is about 40 degrees. In other words, the region C is used in the process of leaning the motorcycle, then also at a significant tilt, and again in the process of putting it back to an upright position while accelerating. Especially with a rear tire, which is susceptible to much wear, the region C is the region which is used when the motorcycle is accelerated from a significantly leaning position.

Since a motorcycle often delivers the greatest drive forces to the tire at the CA of about 40 degrees, it can be said that the region C is the region which receives both the drive force input in the fore-aft direction at acceleration and the lateral force input in the lateral direction most frequently. As a result, the region C is the part where tread wear progresses most quickly.

On the other hand, as described previously, a large tan δ of the tread rubber causes much energy loss. This makes the grip stronger, but increases heating also. Once heated, the rubber becomes softer, and hence the two-wheeled vehicle tire with a thick tread rubber suffers a reduction in rigidity against lateral shearing of the tread rubber. As a consequence, there will not only be a loss of steering stability but also an increase in slippage, thus presenting a problem of quick wear.

A two-wheeled vehicle tire must provide grip at the time of cornering, so that a rubber with a large tan δ is normally placed in the shoulder regions of the tire. However, if there are frequent runs with high-speed rotation at a CA of 45 to 50 degrees, the above-mentioned adverse effect will be brought about by the heating in the tire shoulders. Particularly in severe usage as in a motorcycle race involving high-speed cornerings, the tire is subject to high frequencies of repeated deformation or distortion. Such use may result in extreme heating, and there may be cases where the temperature of the tread surface rises above 120°C. Under these conditions, the lager the tan δ is, the greater the heating of rubber will be. And the tread rubber will be heated abnormally and turn soft as a result of repeated use. This will not only adversely affect the steering stability with reduced shear rigidity of the tread but also quicken the wear. Moreover, the high temperatures of the tread may induce deterioration of the rubber in the tread region. In a motorcycle race which involves violent inputs of forces in high-speed running, air bubbles may occur in the rubber from the tread temperature, if it goes too high. And the air bubbles may cause cracks therefrom, thus bringing about partial losses of tread rubber.

Softening of tread rubber is fatal to the tire for a two-wheeled vehicle. With a two-wheeled vehicle tire, camber thrusts give rise to lateral forces. The camber thrust, as indicated by the loci of the points P and Q of FIG. 7, has a definite size of lateral shear displacement. That is, once the tire dimensions and the CA of the tire are determined, the loci of the belt are geometrically determined. Thus, the maximum distance between the loci of the points P and Q will be the amount by which the tread can be sheared laterally. Because of this characteristic belt behavior, a drop in the modulus of elasticity of tread rubber will lead to a drop in reaction force when the same displacement is given. In other words, if the tread rubber becomes soft from heating, the reaction force of the rubber given the same displacement will drop, and this will result in a drop in the lateral force that may be produced by the tire.

In consideration of these facts, it is necessary that a maximum grip be provided while controlling the heating of the tread rubber. This suggests that a rubber of a large tan δ is desirable for providing good grip, but a rubber with a small tan δ will better control the heating and thus prevent the softening of the tread rubber.

Also, the deformation of the tread in the circumferential direction differs between region A, which is the vehicle-body side region, and region C, which is the non-vehicle-body side region. This is because the speed of the belt differs between region C, which is closer to the tread center, and region A, which is closer to the tread edge.

The two-wheeled vehicle tire is characterized in that it has a greater curvature or roundness in the axial cross section than the passenger vehicle tire. Hence, the belt radius R, which is the distance from the axis of rotation to the belt, is smaller in region A than in region C. That is, the belt radius RC in the region C as shown in FIG. 7 is greater than the belt radius RA in the region A. Therefore, the belt speed, which is the speed of the belt from the engagement of the tread with the road surface until the disengagement of it therefrom with the rolling of the tire, is faster in region C than in region A. This is because the speed of the belt is the belt radius multiplied by the rotational speed of the tire and there is no difference in the rotational speed of the tire between region A and region C. Because of this difference in circumferential speed of the belt, the tread is in a driving state in the region C, which is closer to the tire center, while it is in a braking state in the region A, which is closer to a tread edge of the tire. Driving is, so to speak, a tread deformation, in a cross section across the equator of the tire, such that a shear deformation of the tread surface in contact with the road surface occurs forward in the direction of tire travel in response to the shearing of the inner surface of the tread (the surface in contact with the skeletal members inside the tire) backward in the direction of tire travel. This deformation is equal to the deformation that occurs when a driving force is applied to the tire. On the other hand, braking is the opposite of driving. In braking, the tread deformation is such that a shear deformation of the tread surface in contact with the road surface occurs backward in the direction of tire travel in response to the shearing of the inner surface of the tread forward in the direction of tire travel. This deformation is equal to the deformation that occurs when a braking force is applied to the tire.

These circumferential deformations occur even when the tire is rolling in an idling state without the application of driving force or braking force. And due to these circumferential shear deformations, the tire in the regions A and C tends to slip more easily on the road surface, which contributes to the progress of wear. Also, the above-mentioned circumferential deformations of the tread increase gradually as the tire rotates from when the tread surface engages the road surface. And the circumferential deformations of the tread reach a maximum immediately before the disengagement thereof from the road surface. As the ground contact pressure weakens at the disengagement, the tread slips on the road surface, thus causing the occurrence of wear. It is desirable that there be none of these unnecessary deformations during cornering, which can cause partial wears in the tire shoulders. Note also that these unnecessary circumferential movements are repeated every rotation of the tire. Thus, the rubber is subject to cyclical deformation and heats up easily. These circumferential movements are useless movements that make absolutely no contribution to lateral grip, and the resulting deformations accelerate the heating and wear of the rubber.

Especially when a rubber having a large tan δ is used in the shoulder regions of the tire to increase the lateral grip, there may be a problem of accelerated heating due not only to the lateral deformations but also to the useless circumferential deformations.

The present invention has been made in view of these conventional problems, and an object thereof is to provide a pneumatic tire for a two-wheeled vehicle characterized by superior steering stability with not only improved lateral grip at cornering, reduced tread wear in the shoulder regions, and uniformity of wear on the left and right but also ensured proper heating of the tread on an actual vehicle.

### MEANS FOR SOLVING THE PROBLEM AND EFFECT OF THE INVENTION

In a first aspect of the present invention, a pneumatic tire for a two-wheeled vehicle is provided, as defined in claim 1. Thus, a two-wheeled vehicle tire featuring excellent steering stability and abrasion resistance can be obtained because not only the lateral grip can be secured, but also the heating in the shoulder regions can be controlled.

As defined in Claim 1, the width of a first side dissimilar rubber layer and the width of a second side dissimilar rubber layer are within a range of 5% to 25% of the extended tread width, and the position of an end of the first side dissimilar rubber layer and of an end the second side dissimilar rubber layer, as they are disposed on the tread edge side, are within a range of 5% to 14% of the extended tread width as measured from the tread edge, and the positions of an end of the respective dissimilar rubber layers on the tread center side are within a range of 15% to 30% of the extended tread width as measured from the tread edge. This is to properly control the heating in the more frequently used regions B and C (see FIG. 7) and also to prevent the loss of grip due to too low temperatures in the less frequently used region A.

As such, the dissimilar rubber layers are each disposed within a range of 5% to 30% of the extended tread width as measured from the tread edge. This is to control the heating in the region A (see FIG. 7) which comes into contact with the ground at least when the CA is at a maximum and also to prevent the loss of grip due to too low temperatures.

Note that the "width" of the tread rubber, belt layer, rubber layer, or the like means the length along the curve of the tread surface in the vertical cross section of the tire (axial, or tread width direction, cross section) and the "thickness" thereof means the length along the radial direction of the tire. Also, the "extended tread width" is the length from one edge to the other edge of the tread when the axially rounded tread is spread flat, which is equal to the length measured along the curve of the tread surface from one edge to the other edge thereof.

In a pneumatic tire for a two-wheeled vehicle of the present invention, the tread rubber in the left and right shoulder regions has the respective dissimilar rubber layers in a radially inward position. And the left and right dissimilar rubber layers differ from each other in one or two or more of the loss tangent of rubber, thickness, and width thereof, in the manner defined in claim 1.

If a tire having different values of tan δ of rubber between the left and right dissimilar rubber layers is used as a two-wheeled vehicle tire subject to different frequencies of right-hand cornering and left-hand cornering, then uniformity of wear in the left and right shoulder regions can be secured and the tire life can be lengthened. In doing so, it goes without saying that a rubber with a smaller tan δ is used as the rubber for the dissimilar rubber layer on the more frequently used side.

The tan δ is a value indicating how much energy is absorbed (converted into heat) from deformation of rubber material and is generally measured with a dynamic viscoelasticity measuring instrument. The tan δ is obtained, for example, by applying a sinusoidal displacement of 15 kHz frequency and 5% distortion to a rubber sample and measuring the reaction force at that time. In connection with the present invention, the tan δ was measured with a dynamic viscoelasticity measuring instrument under the conditions of 50°C (temperature), 15 kHz (frequency), and 5% (distortion) . Also, when the motorcycle tire is a racing tire, the tread temperature in the shoulder region can sometimes rise in excess of 100°C. Therefore, in consideration of the purpose of use, the tan δ was measured at 100°C and was incorporated into the present invention. It is preferable therefore that the tan δ at 50°C is used for tires used by general consumers and the tan δ at 100°C for tires used in races.

Also, even when the rubbers of the left and right dissimilar rubber layers are of the same tan δ, use of different thicknesses for the left and right dissimilar rubber layers allows the amount of heat generation in the tread rubber to be controlled. That is, an excessive heating can be prevented by the use of a thicker thickness for the rubber of a small tan δ (rubber of the dissimilar rubber layer) disposed on the more frequently used side, and grip can be secured and at the same time the heating up of the tread receiving only small force inputs can be made easier by the use of a thinner thickness for the rubber of a small tan δ (rubber of the dissimilar rubber layer) disposed on the less frequently used side. Therefore, if the tire as described above is used as a two-wheeled vehicle tire subject to different frequencies of right-hand cornering and left-hand cornering, then it is possible to secure uniformity of wear in the left and right shoulder regions and lengthen the tire life as in the case where different values of tan δ are used for the rubbers of the left and right dissimilar rubber layers.

Also, when different widths are used for the left and right dissimilar rubber layers, the amount of heat generation in the tread rubber can be controlled as in the case where different thicknesses are used for the left and right dissimilar rubber layers. That is, use of a wider width for the rubber of a small tan δ can reduce the amount of heat generation in the tread as a whole. On the other hand, use of a narrower width for the rubber of a small tan δ can increase the amount of heat generation in the tread as a whole. Hence, if the width of the rubber of a small tan δ disposed on the more frequently used side is made wider and the width of the rubber of a small tan δ disposed on the less frequently used side is made narrower, then it is possible to secure uniformity of wear in the left and right shoulder regions and lengthen the tire life in the same way as when different values of tan δ are used for the rubbers of the left and right dissimilar rubber layers or different thicknesses are used therefor.

Described herein, but not forming part of the claimed invention, is a dissimilar rubber layer made of a rubber having a small tan δ is disposed in one of the left and right shoulder regions only. This is equivalent to an extreme case of left-right differences in the invention described above. That is, where the difference in the frequency of use is extreme, disposition of a dissimilar rubber layer in one of the left and right shoulder regions only will secure uniformity of wear in the left and right shoulder regions and lengthen the tire life. For example, on the side where the frequency of use is extremely low, the rubber of a small tan δ is not disposed, thus making it easier for the tread there to heat up. This will not only allow the heating quickly up to a proper temperature despite small force inputs on the side where the frequency of use is extremely low, but also prevent an excessive heating on the side where the frequency of use is extremely high.

In an embodiment of the present invention, the pneumatic tire for a two-wheeled vehicle has the first side dissimilar rubber layer and the second side dissimilar rubber layer located in a region where the tread rubber is disposed. This will allow a reliable control of the temperature rise of the rubber on the tire surface side, so that the life of the tire can be further lengthened.

In an embodiment of the present invention, the pneumatic tire for a two-wheeled vehicle has the thickness of the first side dissimilar rubber layer and the thickness of the second side dissimilar rubber layer within a range of 20% to 70% of the thickness of the tread rubber. This will achieve an effect of sufficiently controlling the heating and at the same time prevent a loss of grip due to excessive control of heating.

In an embodiment of the present invention, the pneumatic tire for a two-wheeled vehicle has an average thickness of the tread rubber between the tread edge and a position 10% of the extended tread width as measured from the tread edge thinner than an average thickness of the tread rubber between positions 10% and 25% of the extended tread width as measured from the tread edge. This will further enhance the effect of retaining the rigidity of the tread edge, in addition to the effect of the rubber having a small tan δ. Therefore, the cornering performance and steering stability can be further improved.

In an embodiment of the present invention, the pneumatic tire for a two-wheeled vehicle has a plurality of rubber layers stacked radially in the tread center region, and the loss tangent of the rubber of at least one of the internal rubber layers is smaller than the loss tangent of the rubber of a rubber layer disposed on the tread surface. This allows controlling of the heating of the rubber in the tread center region also, with the result that the driving and braking characteristics at the time of straight running can also be improved. Note that the "tread center region" meant here is a region located in the middle of the tread having a width of about 25% of the total tread width (extended tread width) and is equal to the part of the tread in contact with the road surface when the motorcycle is standing upright.

In an embodiment of the present invention, the pneumatic tire for a two-wheeled vehicle has the rubber disposed on the tread surface in the tread center region and the rubber adjacent to the tire surface side of one or both of the dissimilar rubber layers continuously joined with each other. This will reduce the number of rubber types constituting the tread, so that the manufacture of the tire can be carried out efficiently.

In an embodiment of the present invention, the pneumatic tire for a two-wheeled vehicle has an innermost rubber layer in the tread center region extending to the tread edge, with the extending portion thereof disposed radially inwardly adjacent to one or both of the dissimilar rubber layers. As a result, the internal heating can be controlled at the whole surface of the tread, and at the same time the amount of heat generation in the shoulder regions can be adjusted by adjusting the tan δ of the rubber of the innermost rubber layer and the tan δ of the rubber of the dissimilar rubber layers.

In an embodiment of the present invention, the pneumatic tire for a two-wheeled vehicle has the rubber of the innermost rubber layer in the tread center region being the same as the rubber of the dissimilar rubber layer, with the innermost rubber layer and the dissimilar rubber layer continuously joined with each other. This will reduce the number of rubber types for the rubber layers of small tan δ with the result that the molding of the tire can be performed more efficiently and also the temperature rise in the dissimilar rubber layer on the center side can be controlled.

In an embodiment of the present invention, the pneumatic tire for a two-wheeled vehicle has a hard rubber 6 mm or less in width (length in the tire axial direction) disposed in at least a part of the wall of the tread edge. This will control the softening of the tread from heating, so that the collapse of the tread resulting from the lateral deformation thereof can be prevented. It is to be noted that the "hard rubber" meant above is a rubber harder than the rubber forming the tread and, more specifically, a rubber having a Shore A hardness of 60 or more and 90 or less at room temperature. Note that the Shore A hardness is measured by dropping a steel ball or a diamond ball onto the surface of a material and that the greater the value of hardness (rebound hardness) determined by the height of bouncing of the ball is, the harder the material is.

In an embodiment of the present invention, the pneumatic tire for a two-wheeled vehicle has at least a part of the tread rubber molded with the narrow and long rubber strips wrapped in spiral layers in the circumferential direction of the tire. As a result, molding accuracy can be assured even for a two-wheeled vehicle tire characterized by distinct roundness, and therefore a tire with high shape accuracy can be obtained.

Also, in an embodiment of the present invention, the pneumatic tire for a two-wheeled vehicle further includes a spiral belt layer in which reinforcement members are arranged at an angle (cord angle) of 0 degrees to 5 degrees with respect to the equatorial direction of the tire. The spiral belt layer does not easily stretch in the circumferential direction, which prevents the swelling of the tire due to the centrifugal force. Therefore, a high-performance two-wheeled vehicle tire featuring excellent steering stability at high-speed running can be obtained.

In an embodiment of the present invention, the pneumatic tire for a two-wheeled vehicle has a belt layer in which reinforcement members are arranged at a cord angle of 80 degrees to 90 degrees with respect to the equatorial direction of the tire is disposed radially outward of the spiral belt layer. This protects the spiral belt layer, thus improving the durability of the tire. Also, the tread base becomes stronger in the lateral direction (tire axial direction), so that high lateral forces can be retained.

In an embodiment of the present invention, the pneumatic tire for a two-wheeled vehicle has a shock-absorbing rubber layer 0.3 mm to 3.0 mm in thickness disposed between the spiral belt layer and the belt layer. As a result, only the circumferential deformations, out of the driving deformations and the braking deformations of the tread due to the difference in belt speed in the shoulder regions, can be absorbed by the shear deformation of the shock-absorbing layer. Therefore, the heating resulting from the circumferential deformation of the tread can be prevented while retaining high lateral forces.

In an embodiment of the present invention, the pneumatic tire for a two-wheeled vehicle has the width of the spiral belt layer being 60% to 90% of the extended tread width. As a result, the belt layer can stretch circumferentially on the tread edge side, so that it is possible to control the braking deformation of the tread. This will reduce heating as a result of repeated deformations and also reduce slips and the heating from slips. Accordingly, the softening of the rubber can be prevented. Also, the reduction in slippage improves abrasion resistance.

### BRIEF DESCRIPTION OF THE DRAWINGS

FIG. 1 is an illustration showing a structure of a two-wheeled vehicle tire in accordance with a preferred embodiment of the present invention.
FIG. 2 is illustrations showing dissimilar rubber layers in accordance with a preferred embodiment of the present invention.
FIG. 3 is illustrations showing other modes of dissimilar rubber layers in accordance with preferred embodiments of the present invention.
FIG. 4 is an illustration showing another structure of a two-wheeled vehicle tire in accordance with a preferred embodiment of the present invention.
FIG. 5 is a table showing the specifications of prototype tires (general) and the results of evaluation.
FIG. 6 is diagrams showing the frequencies of use of bank angles by a racing motorcycle per lap of a circuit.
FIG. 7 is a feature cross section of a two-wheeled vehicle tire in contact with the ground at a CA of 50 degrees.

### REFERENCE NUMERALS

10 two-wheeled vehicle tire
11 bead region
11W bead wire
12A, 12B body ply
13 spiral belt layer
14 radial belt layer
15 tread layer
15a surface layer
15b left dissimilar rubber layer
15c right dissimilar rubber layer
15d middle dissimilar rubber layer
15m inner intermediate layer
15U connecting layer
16 shoulder region
17 center region
18 shock-absorbing layer
19 hard rubber

### BEST MODE FOR CARRYING OUT THE INVENTION

Preferred embodiments of the present invention will be described hereinbelow with reference to the accompanying drawings.

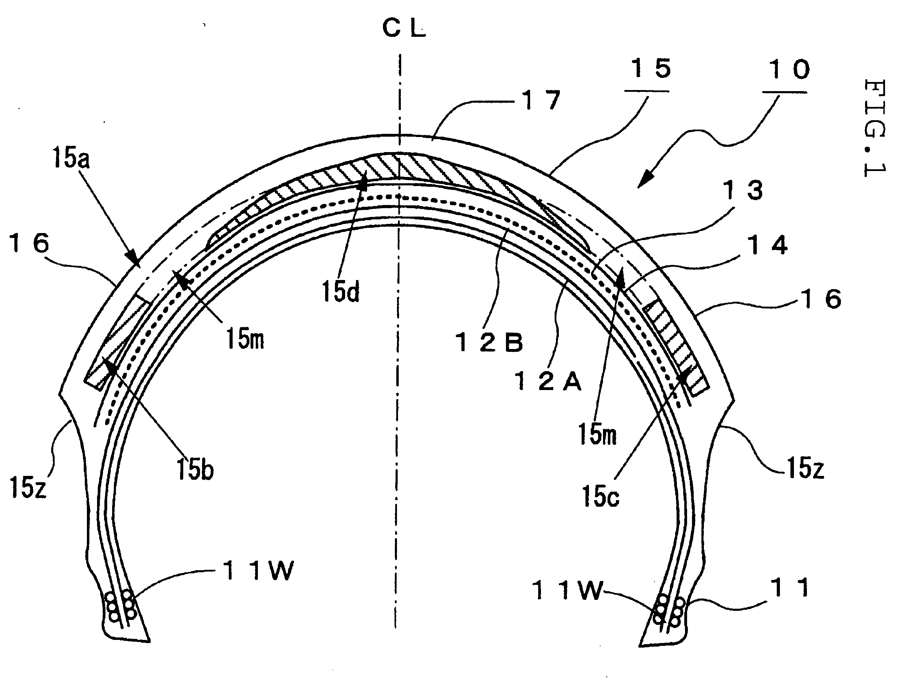

FIG. 1 is an illustration showing a structure of a two-wheeled vehicle tire 10 according to a preferred embodiment of the present invention. The two-wheeled vehicle tire 10 includes two body plies 12A, 12B, a spiral belt layer 13, which is disposed radially outward of the body plies 12A, 12B, a radial belt layer 14, which is disposed radially outward of the spiral belt layer 13, and a tread layer 15, which consists of a rubber member disposed radially outward of the radial belt layer 14.

The two body plies 12A, 12B are each a sheet of an unvulcanized rubber containing twisted cords, which are each a plurality of cords each made from nylon fibers or the like, for instance, arranged in parallel with each other at predetermined placement intervals. When placed in the tire, the cords are so arranged that the cord angle with respect to the equatorial direction is 90 degrees. These two body plies 12A, 12B are fixed together in the bead region 11 held on both sides by bead wires 11W. Or the arrangement may be such that they are fixed by wrapping them around the bead core.

The spiral belt layer 13, whose cord angle is 0 to 5 degrees with respect to the equatorial direction, is formed by spirally winding a steel cord or a cord of twisted aromatic polyamide (trade name: Kevlar) fibers or the like, which is coated with rubber, in the tread.

The radial belt layer 14 has twisted cords, which are made from aromatic polyamide fibers, arranged at predetermined placement intervals, and the cord angle with respect to the equatorial direction is 80 to 90 degrees.

The thickness of the tread layer 15 is 8 mm, and the extended width thereof (extended tread width) is 240 mm. Also, the width of the spiral belt layer 13 and the width of the radial belt layer 14 are both 240 mm.

Note that the extended tread width and the widths of the spiral belt layer 13 and the radial belt layer 14 are all the lengths measured along the curvature of the tread surface in the vertical cross section of the tire.

Note also that the two-wheeled vehicle tire 10 of FIG. 1 is a racing tire and so no grooves are provided in the tread surface.

The tread layer 15 includes a surface layer 15a, which is disposed on the tire surface, left and right dissimilar rubber layers 15b, 15c, which are disposed radially inward of the surface layer 15a in the left and right shoulder regions 16 respectively, a middle dissimilar rubber layer 15d, which is disposed radially inward of the surface layer 15a in the center region 17, and inner intermediate layers 15m, which are disposed radially inward of the surface layer 15a between the left dissimilar rubber layer 15b and the middle dissimilar rubber layer 15d and between the right dissimilar rubber layer 15c and the middle dissimilar rubber layer 15d respectively. The rubber for the surface layer 15a and the rubber for the inner intermediate layers 15m are both high-loss rubber which exhibits a relatively large loss tangent (tan δ) (e.g., tan δ = 0.4).

The above value of tan δ is one measured with a dynamic viscoelasticity measuring instrument, such as Rhemetrix's viscoelasticity measuring instrument, under the measuring conditions of 100°C (temperature), 15 Hz (frequency), and 5% (distortion).

The tread rubber in the left and right shoulder regions 16 is in two layers as described above. Disposed on the surface is the surface layer 15a. And disposed radially inward of the surface layer 15a, that is, in the inner layer of the tread, are the left and right dissimilar rubber layers 15b, 15c, respectively, which are made of a dissimilar rubber having a smaller value of tan δ than that of the above-mentioned high-loss rubber. With the two-wheeled vehicle tire 10 in the present embodiment, the rubbers of the left and right dissimilar rubber layers 15b, 15c have different values of tan δ from each other. Here, suppose that the two-wheeled vehicle tire 10 is a tire which is used more frequently on the left side and that the tan δ of the rubber of the left dissimilar rubber layer 15b disposed on the more frequently used left side is set to 0.2, for instance, and the tan δ of the rubber of the right dissimilar rubber layer 15c disposed on the less frequently used right side is set to 0.3, for instance. In this manner, the amount of heat generation in the tread is adjusted by setting a smaller tan δ for the rubber of the dissimilar rubber layer disposed on the more frequently used side than that for the rubber of the dissimilar rubber layer disposed on the less frequently used side.

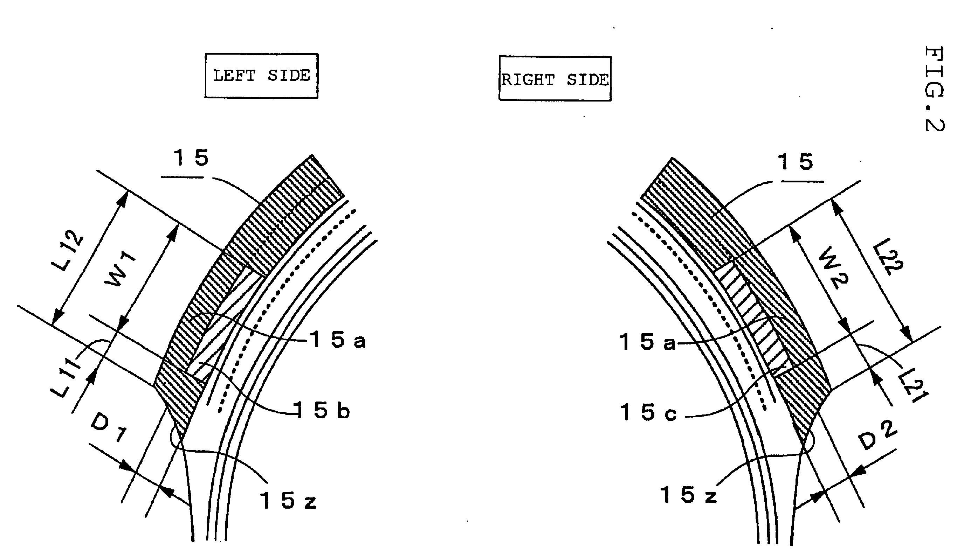

As shown in FIG. 2, the left and right dissimilar rubber layers 15b, 15c are such that the width W1 and the width W2 are each within a range of 5% to 25% of the extended tread width, that the position of the end on the tread edge 15z side, as indicated by the distance L11 or L21, is within a range of 5% to 14% of the extended tread width as measured from the tread edge 15z, and that the position of the end on the center region 17 side, as indicated by the distance L12 or L22, is within a range of 15% to 30% of the extended tread width as measured from the tread edge 15z. Also, the thickness D1 and the thickness D2 thereof are each within a range of 20% to 70% of the total thickness of the tread layer 15.

Note that, in place of tan δ, the width W1 may be made wider than the width W2 or the thickness D1 may be made thicker than the thickness D2. In the present embodiment, however, the amounts of heat generation on the left and right are adjusted by the difference in tan δ only, while W1 = W2 and D1 = D2.

In the present embodiment, the tread rubber in the center region 17 is also in two layers. Disposed on the surface is a surface layer 15a, and disposed radially inward of the surface layer 15a is a middle dissimilar rubber layer 15d, which is made of a dissimilar rubber having a small tan δ. The rubber used for the middle dissimilar rubber layer 15d is one with the same value of tan δ as that of the rubber for the left dissimilar rubber layer 15b.

It is to be noted that the center region 17 is a part of the tread in contact with the road surface when the motorcycle is standing upright. It is a region located in the middle of the tread, and the width thereof is about 25% of the extended tread width. In the present embodiment, the width of the middle dissimilar rubber layer 15d is 15% to 25% of the extended tread width.

For the two-wheeled vehicle tire 10 of the present invention, a high-loss rubber having a relatively large tan δ is disposed in the surface layer 15a, which is also located on the surface side of the tread in the left and right shoulder regions 16. Disposed radially inward thereof are left and right dissimilar rubber layers 15b, 15c, respectively, which are made of a rubber having a smaller tan δ than that of the above-mentioned high-loss rubber. Accordingly, the heating due to deformation will be less than when the shoulder regions 16 are entirely made of a high-loss rubber, and thus the heating in the shoulder regions 16 can be controlled. As a result, the drop in shear rigidity of the shoulder regions 16 due to softening can be reduced, and therefore not only the steering stability can be secured, but also the progress of wear can be controlled. Also, a high-loss rubber is disposed in the surface layer of the shoulder regions 16, so that the level of lateral grip equivalent to the conventional level can be secured.

Here, it is important that the width W1 and the width W2 of the left and right dissimilar rubber layers 15b, 15c, respectively, are each within a range of 5% to 25% of the extended tread width and at the same time the positions of both ends of the left and right dissimilar rubber layers 15b, 15c, respectively, are set as follows. That is, the position of the end on the tread edge 15z side is within a range of 5% to 14% of the extended tread width as measured from the tread edge 15z, and the position of the end on the center region 17 side is within a range of 15% to 30% of the extended tread width as measured from the tread edge 15z.

The reason for setting the positions of both ends of the left and right dissimilar rubber layers 15b, 15c, respectively, as mentioned above is as follows. If the position of the end on the tread edge 15z side of the left and right dissimilar rubber layers 15b, 15c, respectively, is less than 5% of the extended tread width as measured from the tread edge 15z, a dissimilar rubber of a small tan δ will be disposed in more than half of the region within the region A (see FIG. 7) which is subject to relatively low frequency of use. And this may result in a loss of grip because of the insufficient warming of the tread on an actual vehicle. Also, if the above end position is more than 14% of the extended tread width as measured from the tread edge 15z, there will be less than enough volume of the dissimilar rubber of a small tan δ disposed in the region B (see FIG. 7) which is subject to high frequency of use. This may make it difficult to control the heating in the region B sufficiently.

Also, if the position of the end on the center region 17 side of the left and right dissimilar rubber layers 15b, 15c, respectively, is less than 15% of the extended tread width as measured from the tread edge 15z, a dissimilar rubber of a small tan δ will not be disposed within the region C (see FIG. 7) which is subject to high frequency of use and severe wear. And this may result in insufficient control of the heating in the region C even if there is a dissimilar rubber of a small tan δ disposed in the neighboring region B. Also, if the above end is more than 30% of the extended tread width as measured from the tread edge 15z, the range in which the dissimilar rubber is disposed will extend into the region where the heating is insignificant. Then, there may be cases where sufficient grip cannot be gained because of the too low temperature of the tread.

Further, it is imperative that the width W1 and the width W2 of the left and right dissimilar rubber layers 15b, 15c, respectively, are each within a range of 5% to 25% of the extended tread width. That is, if the width W1 and the width W2 of the dissimilar rubber of a small tan δ are each less than 5% of the extended tread width, a sufficient effect of the dissimilar rubber will not be achieved due to the less than enough volume thereof. Also, the reason why the upper limit of the width W1, W2 is 25% is that if the range where the dissimilar rubber is disposed extends into the region where the heating is insignificant, there may be cases where sufficient grip cannot be gained because of the too low temperatures of the tread. That is, the region of the tread coming into contact with the ground when the CA is large is 1/4 of the extended tread width, namely, the region between the tread edge 15z and the position 25% of the extended tread width as measured from the tread edge 15z. However, even when the CA is 40 degrees, that is, when the vehicle body is a little more erect than at a maximum CA, the region is also subject to large driving forces, so that there will be a significant amount of heat generation in the tread. Therefore, if the region of the tread where heating is significant at a CA of 40 degrees is included, the region having significant heating will be the region between the tread edge 15z and the position about 30% of the extended tread width as measured from the tread edge 15z. Also, the lower limit of the distance L11 and the distance L12/21 of the left and right dissimilar rubber layers 15b, 15c, respectively, from the tread edge 15z to the end thereof on the tread edge 15z side is 5%. Therefore, it is necessary that the width W of the dissimilar rubber having a small tan δ be within a range of 5% to 25% of the extended tread width if the heating in the shoulder regions 16 is to be controlled effectively without a loss of grip.

Also, it is preferable that the thickness of the left and right dissimilar rubber layers 15b, 15c is 20% to 70% of the thickness of the tread rubber. If this thickness is less than 20%, the rubber layer of a small tan δ will be too thin to achieve a sufficient heating control effect. On the other hand, if the thickness is more than 70%, the tread temperature will not rise to the normally expected level, especially in the region A (see FIG. 7) which is subject to low frequency of use. And this may lead to a drop in lateral forces (camber thrusts). Also, under conditions where tire wear is expected, the thickness of the dissimilar rubber being more than 70% will cause its own exposure on the surface, and consequently a loss of grip, even when the wear of the dissimilar rubber has not so far progressed. This is because the dissimilar rubber of a small tan δ does not bite into the minute unevenness of the aggregate contained in asphalt or the like as much as a high-loss rubber and, as a result, the friction coefficient drops, and the grip becomes weaker. Hence, the thickness of the left and right dissimilar rubber layers 15b, 15c is preferably within a range of 20% to 70% of the thickness of the tread rubber and more preferably within a range of 20% to 50%. In particular, commercially available tires, unlike the racing tires, are often used until the wear advances considerably. Therefore, the thickness of the left and right dissimilar rubber layers 15b, 15c is most preferably within a range of 20% to 40% of the thickness of the tread rubber so that the dissimilar rubber may not be exposed on the surface from tire wear.

Note that in the case where the thickness of the dissimilar rubber layer 15b (or the dissimilar rubber layer 15C) varies in the axial direction, it is preferable that the thickness thereof at the thickest point is within the above-mentioned range.

In the present embodiment, as described above, the amount of heat generation in the tread is adjusted by setting a smaller tan δ for the rubber of the left dissimilar rubber layer 15b disposed on the more frequently used left side than that for the rubber of the right dissimilar rubber layer 15c disposed on the less frequently used right side. If a rubber of a small tan δ, which does not heat up easily, is used on the less frequently used side, it takes time for the tread rubber to reach proper temperatures. On the first to fifth laps of the race, the tread rubber may not heat up, so that the normally expected level of grip cannot be obtained. This is because the tread rubber used for racing is so designed as to provide good grip when the heating reaches a temperature of about 100°C. Therefore, it is possible to control the heating properly by using a rubber of a small tan δ on the more frequently used side. In other words, the difference in the amount of heat generation due to the difference in the frequency of use between the left and the right side of the tire can be adjusted by the choice of rubber. Accordingly, with different values of tan δ of the inner rubber chosen between the left and right shoulder regions 16, the benefits of the present invention, namely, the improved lateral grip at cornering and abrasion resistance of the tread in the shoulder regions 16, can be derived in a well-balanced manner for both the right-hand cornering and the left-hand cornering. Also, since the wear on the left side and the right side can be so adjusted as to progress at similar rates, it is possible to achieve uniformity of wear on the left and right sides by controlling the progress of wear in the left shoulder region 16 which is subject to a higher frequency of use.

For example, if a rubber having a not sufficiently small tan δ is disposed on both sides, the rubber on the frequently used side, and not the less frequently used side, may heat up to 130°C or above. And this may soften the rubber and reduce the tread rigidity, so that adequate lateral forces cannot be obtained. As a result, the tire will be more likely to sideslip, which will contribute to quicker progress of wear with the result that proper grip is no longer provided in the latter half of a race. Now the tire will slip more and heat up more as a consequence. And eventually, if a high-temperature condition with much heat generation lasts long, air bubbles may occur inside the tread, and cracks may develop from the air bubbles, thus causing the destruction of the rubber accompanied by its partial losses. Therefore, it is preferable that the tan δ of the rubber constituting the tread edge surface is adjusted according to the magnitude of input forces and the frequency of use.

Also, a middle dissimilar rubber layer 15d made of a dissimilar rubber of a small tan δ is disposed in the tread inner layer of the center region 17. This improves not only the rolling resistance characteristic in straight running but also the lateral grip. This is because, at the time of cornering with a large CA, the center region 17 of the tire performs the role played by the side region thereof in straight running. The middle dissimilar rubber layer 15d can control the temperature rise in the center region 17 and prevent the softening of the rubber of the surface layer 15a. This may raise the rigidity of the center region 17, thereby securing the capacity to withstand high lateral forces. That is, when there are increased lateral forces with the left and right dissimilar rubber layers 15b, 15c provided, the tire deformations may also increase, but provision of the middle dissimilar rubber layer 15d reinforces the center region 17, thus improving steering stability.

The arrangement may also be such that the middle dissimilar rubber layer 15d is disposed over the entirety of the center region 17. And if its width is 15% or more of the total tread width, the temperature rise in the center region 17 can be controlled sufficiently. Therefore, the width of the middle dissimilar rubber layer 15d is preferably 15% to 25% of the total tread width.

Also, in the present embodiment, the rubber on the tire surface side of the middle dissimilar rubber layer 15d (surface rubber in the center region 17) and the rubber adjacent to the tire surface side of the left and right dissimilar rubber layers 15b, 15c are both a high-loss rubber having a relatively large tan δ and are continuously joined with each other to form the surface layer 15a. Therefore, at the time of molding the tire, the rubber constituting the surface layer 15a may be wrapped around after the left and right dissimilar rubber layers 15b, 15c, the inner intermediate layers 15m, and the middle dissimilar rubber layer 15d are wrapped around the drum. That is, the rubber on the tire surface side of the middle dissimilar rubber layer 15d and the rubber adjacent to the tire surface side of the left and right dissimilar rubber layers 15b, 15c are wrapped together, and therefore the manufacture of the tire can be carried out efficiently.

Further, it is preferable that narrow and long rubber strips are wrapped in spiral layers along the circumferential direction of the tire for the molding of the rubbers of the respective rubber layers 15a to 15d and 15m of the tread layer 15. This may ensure the accuracy of molding of the two-wheeled vehicle tire, which is typically round, and thus a tire with high shape accuracy can be obtained.

Also, in the present embodiment, a spiral belt layer 13, which does not stretch easily in the circumferential direction and whose cord angle is 0 degrees to 5 degrees with respect to the equatorial direction, is disposed between the body plies 12 (12A, 12B) and the belt layer (radial belt layer 14). This will prevent the swelling of the tire caused by the centrifugal force. Accordingly, a high-performance two-wheeled vehicle tire featuring superior steering stability in high-speed running can be obtained.

Also, in the present embodiment, the belt layer disposed radially outward of the spiral belt layer 13 is a radial belt layer 14, so that high lateral forces can be retained. That is, the radial belt layer 14, which is a belt layer having a cord angle of 80 degrees to 90 degrees with respect to the equatorial direction, extends substantially in the axial direction in the outermost layer of the belt layer. Thus, placed widely in the shoulder regions 16, it gives strength to the base of the tread layer 15 in the lateral (axial) direction of the tire. Hence, the radial belt layer 14 has rigidity against lateral shear of the tread and thus provides a capacity to retain strong lateral forces. In other words, even when the rubber has softened a little as a result of heating, the tire displays strength in the lateral direction because of the presence of the radial belt layer 14 inside.

Also, as described above, the spiral belt layer 13 proves effective in preventing the swelling of the tire caused by the centrifugal force and improving the steering stability in high-speed running. Note that there are actually tires having the belt layer constituted by the spiral belt layer 13 alone because the spiral belt layer 13 can keep the belt rigidity relatively high on its own. Also, where the spiral belt layer 13 is provided and therefore the belt rigidity is high, the belt to join with the spiral belt layer 13 in the belt layer is such that the cord angle with respect to the equatorial direction is 40 degrees to 80 degrees in most cases. In such a case, it is the spiral belt layer 13 that takes the internal pressures of the tire mostly. Thus, if the spiral belt layer 13 should sustain damage, there will be chances of the tire bursting. For example, if the tire, with the tread worn thin, rolls on a projection at high speed or if the spiral belt layer 13 is exposed as a result of overuse of a worn tire, there may develop chances of the spiral belt layer 13 rupturing. Therefore, a belt layer with axial cords, such as the radial belt layer 14, may be provided radially outward of the spiral belt layer 13, so that the spiral belt layer 13 may be protected effectively.

As described hereinabove, according to the preferred embodiments of the invention, the rubber of the tread surface layer 15a is a high-loss rubber having a relatively large tan δ. At the same time, the left and right dissimilar rubber layers 15b, 15c, which are made of a dissimilar rubber having a smaller tan δ than that of the above-mentioned high-loss rubber, are disposed radially inward in the tread in the left and right shoulder regions 16, respectively. And the left and right dissimilar rubber layers 15b, 15c are such that the width W1 and the width W2 thereof are each within a range of 5% to 25% of the extended tread width, the position (L11, L21) of the end thereof on the tread edge 15z side is within a range of 5% to 14% of the extended tread width as measured from the tread edge 15z, the position (L12, L22) of the end thereof on the center region 17 side is within a range of 15% to 30% of the extended tread width as measured from the tread edge 15z, and the thickness D1 and the thickness D2 thereof are each 20% to 70% of the thickness of the tread rubber. Thus, the deformation of the tread resulting from heat generation is small. And in the region A subject to relatively low frequency of use, the temperature does not go down too low, and therefore the heating in the shoulder regions 16 can be controlled and the grip on an actual vehicle can also be secured. This will not only ensure the steering stability but also control the progress of wear.

Here it is important that the tan δ of the rubber of the left dissimilar rubber layer 15b disposed on the more frequently used left side be set smaller than the tan δ of the rubber of the right dissimilar rubber layer 15c disposed on the less frequently used right side. This way it is possible to properly control the heating and adjust the difference in the amount of heat generation due to the difference in the frequency of use between the left and the right side. Accordingly, the lateral grip at cornering and the abrasion resistance of the tread in the shoulder regions 16 can both be improved. Also, since the wear on both sides of the tire progresses substantially at the same rate, uniformity of wear on the left and the right can be achieved.

Also, a middle dissimilar rubber layer 15d made of a rubber having the same tan δ as that of the rubber of the left dissimilar rubber layer 15b is disposed in the inner layer of the tread in the center region 17. This improves the driving and braking performance in straight running. This also provides a capacity to retain high lateral forces by raising the rigidity of the center region 17, thus further improving steering stability.

Also, the rubber on the tire surface side of the left and right dissimilar rubber layers 15b, 15c and the rubber on the tire surface side of the middle dissimilar rubber layer 15d are both a high-loss rubber having a relatively large tan δ and are continuously joined with each other to form the surface layer 15a. Therefore, the rubber on the tire surface side of the middle dissimilar rubber layer 15d and the rubber adjacent to the tire surface side of the left and right dissimilar rubber layers 15b, 15c can be wrapped together. Thus the manufacture of the tire can be carried out efficiently. In that process, narrow and long rubber strips may be wrapped in spiral layers along the circumferential direction of the tire for the molding of the rubbers of the respective layers 15a to 15d and 15m of the tread layer 15. This may ensure the accuracy of molding, and thus a tire with high shape accuracy can be obtained.

Also, in the present embodiment, a spiral belt layer 13, which does not stretch easily in the circumferential direction and whose cord angle is 0 degrees to 5 degrees with respect to the equatorial direction, is disposed between the body plies 12 and the radial belt layer 14. This will prevent the swelling of the tire caused by the centrifugal force. Accordingly, a high-performance two-wheeled vehicle tire featuring superior steering stability in high-speed running can be obtained.

In the preferred embodiment described hereinabove, the arrangement is such that the tan δ of the high-loss rubber constituting the surface layer 15a and the inner intermediate layers 15m is 0.4, the tan δ of the dissimilar rubber constituting the left dissimilar rubber layer 15b and the middle dissimilar rubber layer 15d is 0.2, and the tan δ of the dissimilar rubber constituting the right dissimilar rubber layer 15c is 0.3. However, the tan δ of the high-loss rubber is not limited to the above value, and it may be a value that enhances the grip, that is, increases the friction coefficient (e.g. , tan δ = about 0.35 to 0.55). In doing so, it goes without saying that it is of primary importance that the tan δ of the rubber of the left and right dissimilar rubber layers 15b, 15c disposed in the inner layer of the tread be set smaller than the tan δ of the above-mentioned high-loss rubber and that the tan δ of the rubber of the left dissimilar rubber layer 15b disposed on the more frequently used left side be set smaller than the tan δ of the rubber of the right dissimilar rubber layer 15c disposed on the less frequently used right side.

Also, in the above-described embodiment, the amounts of heat generation in the tread are adjusted by the use of different values of tan δ for the left and right dissimilar rubber layers 15b, 15c. However, the amounts of heat generation in the tread can also be adjusted by the use of different thicknesses of the left and right dissimilar rubber layers 15b, 15c while the same values of tan δ and width are used therefor. If the tread temperature is controlled by adjusting the amounts of heat generation in the tread, then the rate of softening of the rubber can be adjusted, and therefore the shear rigidity of the tread can be changed in the same way as in the foregoing preferred embodiment.

That is, if the thickness of the dissimilar rubber layers (dissimilar rubber layers 15b, 15c) made of rubber having a small tan δ in the inner layer in the shoulder regions 16 is large, there will be smaller amounts of heat generation due to the deformation of the rubber. Thus there will be less likelihood of the rubber softening, which will strengthen the shear rigidity of the tread. And the resulting capacity to fully withstand the lateral forces improves both gripping performance and abrasion resistance. On the other hand, if the thickness of the dissimilar rubber layers is small, there will be much energy loss (heating of rubber) in the tread as a whole, and the tread can heat up easily. In this case, while the tire can display good grip from the early stage of running, the rubber may soften easily and wear easily.

Therefore, the thickness of the dissimilar rubber layer may be made thicker so as to control the heating and raise the rigidity of the tread on the more frequently used side of left-hand and right-hand cornerings (for example, where there are more right-hand corners which are high-speed corners with relatively large cornering radius and there is excessive tire wear). Then the grip can be enhanced, and the abrasion resistance can be improved at the same time. On the other hand, the thickness of the dissimilar rubber layer may be made thinner on the less frequently used side such that priority is given to the grip. That is, on the less frequently used side, the time used in the running is short even if the tread there can heat up easily. Thus, the tread temperature (amount of heat generation) can be adjusted to nearly the same level as on the more frequently used side. Also, on the less frequently used side, the problem often arises that the tread temperature does not rise easily on the initial several laps of a race and so sufficient grip cannot be obtained with the tread not heating up to proper temperatures. Nevertheless, if a thin rubber of a small tan δ is disposed on the less frequently used side as described above, the tread temperature can be raised easily even if there are fewer force inputs, that is, the part of the tread is used less frequently. This is because the rubber on the surface side of the tread has a large tan δ.

The rubber used for racing tires is so designed as to provide good grip when it reaches high temperatures. Therefore, good grips are hard to obtain until the rubber heats up to temperatures of about 100°C. The tread rubber on the less frequently used side may not easily heat up to high temperatures, but this problem can be solved by choosing a thinner thickness D2 for the rubber of a small tan δ (rubber of the right dissimilar rubber layer 15c here) disposed on the less frequently used side as described above.

On the other hand, if a thin rubber with a small tan δ is disposed on the more frequently used side, then the heating will be quick with the tread temperature easily reaching 100°C or above. Especially where the tire is used frequently and is subject to severe force inputs over a long period of time, air bubbles may develop inside the rubber and eventually result in a failure of the rubber. In consideration of this point, too, it is beneficial to choose a thicker thickness D1 for the rubber of a small tan δ (rubber of the left dissimilar rubber layer 15b here) disposed on the more frequently used side to prevent quick heating and a thinner thickness D2 for the rubber of a small tan δ (rubber of the right dissimilar rubber layer 15c) disposed on the less frequently used side to gain grip and also accelerate the heating of the tread with limited input forces.

Or it may be so arranged that different values are used for the width W1 of the left dissimilar rubber layer 15b and the width W2 of the right dissimilar rubber layer 15c while the same value of tan δ and the same thickness are used for the left and right dissimilar rubber layers 15b, 15c. If the width of the rubber of a small tan δ inside is wide, there will be less heating in the tread as a whole. On the other hand, if the width of the rubber of a small tan δ inside is narrow, there will be more heating in the tread as a whole. Therefore, if the width W1 of the left dissimilar rubber layer 15b disposed on the more frequently used left side is set wider and at the same time the width W2 of the right dissimilar rubber layer 15c disposed on the less frequently used right side is set narrower, then it is possible to control the heating properly and adjust the difference in the amount of heat generation due to the difference in the frequency of use between the left and the right side of the tire. Accordingly, the lateral grip at cornering and the abrasion resistance of the tread in the shoulder regions 16 can both be improved. Also, since the wear in the shoulder regions 16 progresses substantially at the same rate on both sides, uniformity of wear on the left and right sides can be achieved.

Also, when the frequency of use is extremely different between the left side and the right side, it may be so arranged that the dissimilar rubber layer is disposed in only one of the shoulder regions. More specifically, no rubber of a small tan δ is disposed on the side subject to extremely infrequent use, so that the tread can heat up better. In this way, the tread on the side subject to extremely infrequent use can be heated quickly up to a proper level of temperature despite the less than adequate input of forces. In contrast, on the side subject to extremely frequent use, the heating is controlled by the dissimilar rubber layer disposed therein.

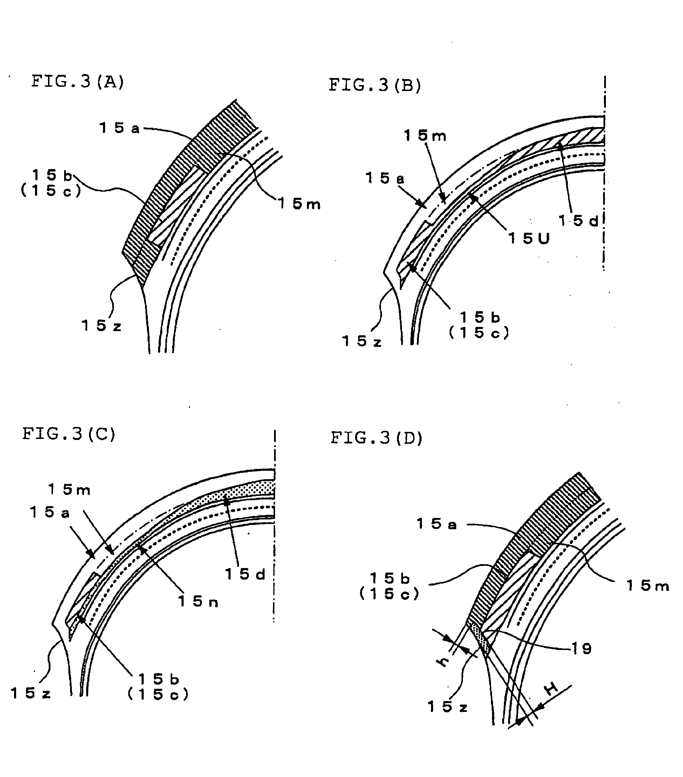

Also, in the above-described embodiment, the width of the left and right dissimilar rubber layers 15b, 15c is fixed in the thickness direction as shown in FIG. 3A. However, the arrangement may be such that, as shown in FIG. 3B, a connecting layer 15U may be disposed in such a manner as to extend the center-side end of one or both of the left and right dissimilar rubber layers 15b, 15c and connect it to the middle dissimilar rubber layer 15d, thereby continuously joining one or both of the left and right dissimilar rubber layers 15b, 15c with the middle dissimilar rubber layer 15d. This may reduce the number of rubber types for the rubber layers of small tan δ, thus making the manufacture of the tire more efficient. Also, the choice of this structure enables simultaneous control of the temperature rise in the center region 17 side of one or both of the left and right dissimilar rubber layers 15b, 15c, so that the grip is also improved. In this case, however, the thickness of the connecting layer 15U is preferably thinner than the thickness of the left and right dissimilar rubber layers 15b, 15c and more preferably a half or less than the thickness thereof. Such an arrangement will prevent the loss of grip resulting from an excessive control of heating.

It should be noted that it is not necessary that the tan δ of the rubber of the middle dissimilar rubber layer 15d and the tan δ of the rubber of the left and right dissimilar rubber layers 15b, 15c are of the same value. Also, it may be so arranged that the tread edge 15z side of the rubber of the middle dissimilar rubber layer 15d is extended to the vicinity of the tread edge 15z and joined with the left and right dissimilar rubber layers 15b, 15c. In this case, as shown in FIG. 3C, the extension part 15n of the middle dissimilar rubber layer 15d is preferably disposed on the undersurface (radially inward) of one or both of the left and right dissimilar rubber layers 15b, 15c. In this manner, too, the temperature rise in the center region 17 side of one or both of the left and right dissimilar rubber layers 15b, 15c can be controlled simultaneously in the same way as in the example shown in FIG. 3B. Therefore, the heating of the tread as a whole can be controlled, and the grip can be improved.

Also, as shown in FIG. 3D, a hard rubber 19 may be disposed at the wall of the tread edge so as to control the softening of the tread rubber from heating. Then it is possible to prevent the collapse of the tread resulting from a lateral deformation thereof. Note that the hard rubber 19 is harder than any other rubbers forming the tread layer 15. This may prevent the tread edge from lifting up from the road surface.

It is preferable that the hard rubber 19 is not exposed on the tread surface side of the wall of the tread edge. This is because the hard rubber 19 has a low friction coefficient because of its hardness. The hard rubber 19 reaching the tread surface does not provide any improvement in frictional force by its contact with the road surface and, worse still, may reduce the contact area of the softer rubber (high-loss rubber). In the present example, therefore, the hard rubber 19 is disposed such that the radially outward position of the hard rubber 19 is at a depth h of about 1 mm from the tread surface.

Also, the thicker the thickness H (axial length) of the hard rubber 19 is, the smaller the amount of rubber for the left and right dissimilar rubber layers 15b, 15c disposed in the inner layer in region A will be. Therefore, the thickness H is preferably 6 mm or less at the thickest point. It should be noted that the hard rubber 19 displays its advantageous effect if the thickness H thereof is 1 mm or more, although it may depend on its hardness. The thickness H is more preferably 2 mm to 5 mm.

Also, in the above-described embodiment, the thickness of the tread rubber is fixed in the axial direction of the tire. However, the thickness of the tread rubber on the tread edge side where the rubber of a small tan δ is disposed may be set thinner than that of the tread rubber in other parts thereof. Then the advantageous effect of the disposition of the rubber of a small tan δ can be further enhanced. A thinner thickness (tread gauge) of the tread rubber improves the tread rigidity in that part. The purpose of placing a rubber of a small tan δ radially inside as tread rubber in the shoulder regions is to prevent a drop in the modulus of elasticity of the rubber by controlling the heating. In this manner, the advantageous effect of retaining the tread rigidity can be ensured by thinning the part where the rubber of a small tan δ is disposed. And this further improves the cornering performance and steering stability.

Note that the tread rigidity is proportional to the cube of the thickness of the tread layer 15. Therefore, where the thickness of the tread layer 15 is 8 mm for instance, thinning the thickness by about 0.5 mm to 1.5 mm will provide an adequate effect. Also, the extent in which the thickness of the tread layer 15 is made thinner is preferably to the point of 10% of the extended tread width. That is, in the extent to the point 10% of the extended tread width, the thickness of the tread rubber may be made thinner than the average thickness of the tread rubber between the positions 10% and 25% of the extended tread width as measured from the tread edge 15z. Note, however, that if the entirety of the tread rubber in the shoulder region 16 is made thinner, the tread rigidity in the shoulder region 16 may improve, but the slippage of the tire surface may generally increase, thus shortening the wear life. Hence, in the regions B and C where the frequency of ground contact is high, the thickness of the tread rubber should not be made thinner even when a rubber of a small tan δ is disposed there.

Also, in the above-described embodiment, the width of the spiral belt layer 13 is nearly the same as the extended tread width. However, the width of the spiral belt layer 13 may be made narrower than the extended tread width. Then it is possible not only to prevent excessive heating but also to improve the abrasion resistance. This is because the absence of the spiral belt layer 13 at least in the region A (see FIG. 7 for the regions A, B, and C in the shoulder region 16) allows the radial belt layer 14 to stretch circumferentially on the tread edge side, so that it is possible to control the braking deformation of the tread. In other words, the radial belt layer 14 stretching circumferentially in the region of ground contact means an increase in belt speed, which in turn means reduction in belt speed differences in the region A and the region C. This may decrease needless deformations (braking deformations) in the circumferential direction of the tread with the result that the heating of the rubber due to repeated deformations is reduced. As a result, slipping is reduced, and the heating from slips will be reduced, too. This will also prevent the softening of the rubber. Also, the reduction in slips improves abrasion resistance, so that a rubber with an even higher friction coefficient (grip), namely, a rubber with a higher tan δ than that of the known art, can be disposed on the surface of the tread edge.

The width of the spiral belt layer 13 is preferably 60% to 90% of the extended tread width. If the width of the spiral belt layer 13 is more than 90% of the extended tread width, the circumferential stretch of the belt layer will be reduced, making it difficult to control the braking deformation of the tread. Conversely, if the width of the spiral belt layer 13 is less than 60% of the extended tread width, then an area where the spiral belt layer 13 does not exist will be created even in the region C. This may cause a circumferential stretch of the belt layer even in the region C, and as a result, there will be no substantial reduction in belt speed difference between the region A and the region C. Accordingly, there will be a smaller capacity for controlling the braking deformation, so that the heating of the rubber from repeated deformations cannot be reduced. Also, because of the absence of the spiral belt layer 13 in most of the region of ground contact, there may be least "hoop effect" working, and the steering stability at high-speed running will drop. Therefore, the width of the spiral belt layer 13 is preferably 60% to 90% of the extended tread width.

Also, in the above-described embodiment, a radial belt layer 14 having a cord angle of 90 degrees is disposed radially outward of the spiral belt layer 13. However, a belt layer consisting of two crossed belts may be disposed there instead. These crossed belts are, for example, each 0.7 mm diameter cords made by twisting aromatic polyamide fibers, which are arranged at placement intervals of 30 cords per 50 mm, and the two belts are crossed with each other at an angle of 50 degrees with respect to the equatorial direction.

Also, the spiral belt layer 13 may be eliminated. In such a case, two crossed belts may be disposed in such a manner that they are crossed with each other at an angle of 30 degrees with respect to the equatorial direction.

Or the crossed belts may be eliminated, and the spiral belt layer 13 only may be disposed.

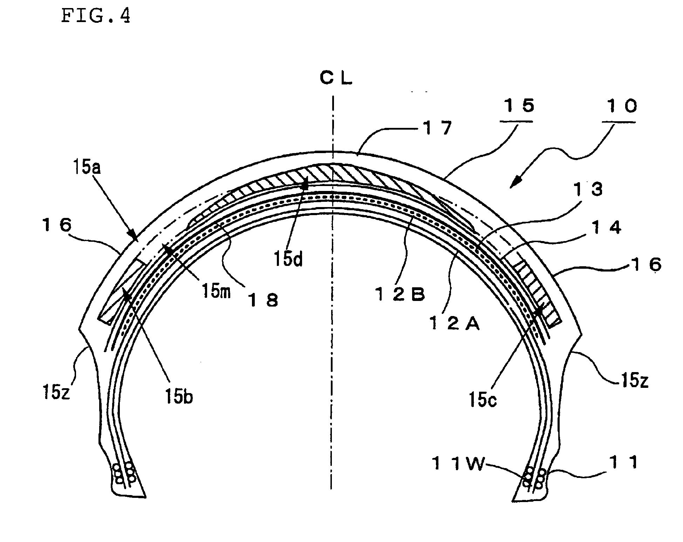

Further, as shown in FIG. 4, a shock-absorbing layer 18 having a thickness of 0.3 mm to 3.0 mm may be disposed between the spiral belt layer 13 and the radial belt layer 14 to further prevent partial wear and excessive heating. This is done in order to absorb the circumferential deformations out of the driving deformations and braking deformations of the tread layer 15 as a result of shear deformation in the circumferential direction of the shock-absorbing layer 18. Since the shock-absorbing layer 18 does not absorb deformations in the axial direction, the lateral deformations of the tread remain large. Thus the heating due to the circumferential deformations of the tread can be prevented while high lateral forces are retained. Especially when the left and right dissimilar rubber layers 15b, 15c, made of a dissimilar rubber of a small tan δ, are disposed in the inner layer in the left and right shoulder regions 16 respectively, as in the present embodiment, there will be a reduction in the distortion of the surface layer 15a of a high-loss rubber disposed on the surface side of the left and right dissimilar rubber layers 15b, 15c by virtue of the deformation of the shock-absorbing layer 18. As a result, the heating can be better prevented. Note that the shock-absorbing layer 18 and the radial belt layer 14 should preferably be so disposed as to overlap with the left and right dissimilar rubber layers 15b, 15c in the tread edges.

### [Examples]

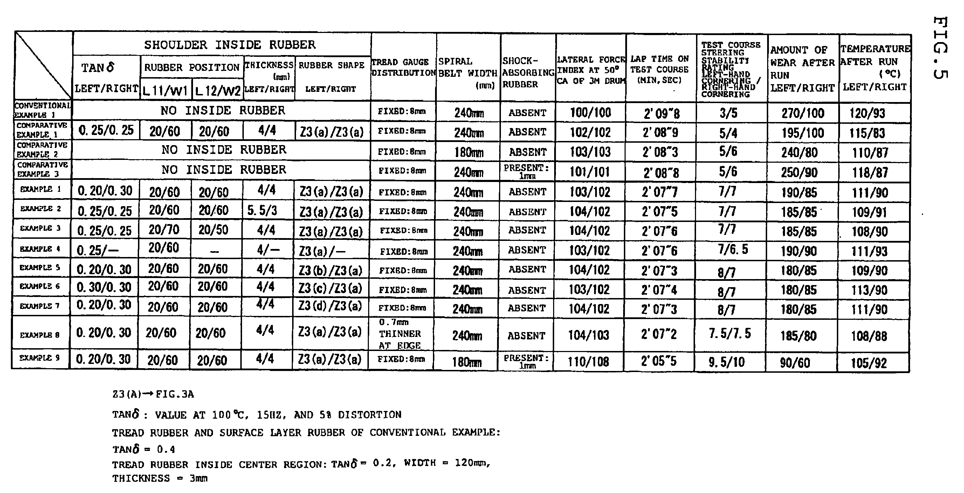

In connection with the two-wheeled vehicle tire as shown in FIG. 1, a lateral force test at a CA of 50 degrees, a steering stability evaluation test by a driver, and a measurement of wear and temperature in the shoulder region after running were conducted by preparing tires according to the present invention having a dissimilar rubber layer of a small tan δ in the inner layer on the tread edge side in each of the left and right shoulder regions (Examples 1 to 3 and 5 to 9), a tire having a dissimilar rubber layer on the left side only, not claimed herein (Example 4), conventional tires without the dissimilar rubber layers (Conventional Example1), tires having the same dissimilar rubber layers on the left and right (Comparative Example 1), tires having a spiral belt layer of a small width without the dissimilar rubber layers (Comparative Example 2), and tires having a shock-absorbing layer (Comparative Example 3). The results are shown in the table of FIG. 5.

The test tires are two-wheeled vehicle tires, and their tire size is 190/50ZR17.

All of these tires have two body plies. The body plies each use, as a carcass, a sheet of an unvulcanized rubber containing 0.6 mm diameter cords, which are each made by twisting nylon fibers, arranged in parallel with each other at placement intervals of 65 cords per 50 mm. These two body plies are radial (angle with respect to the equatorial direction: 90 degrees).

The spiral belt layer is formed of 0.7 mm diameter cords, which are each made by twisting aromatic polyamide (trade name: Kevlar) fibers, arranged at placement intervals of 50 cords per 50 mm. The spiral belt layer may also be made from steel cords. In such a case, the spiral belt layer may be formed by spirally winding steel cords, each made for instance by twisting a 0.12 mm diameter single steel wire into 1×3 type, at placement intervals of 30 cords per 50 mm.

The radial belt layer have 0.6 mm diameter cords, which are each made by twisting aromatic polyamide fibers, arranged at placement intervals of 50 cords per 50 mm.

The thickness of the tread layer is 8 mm constantly from the center region to the shoulder region. The extended width of the tread is 240 mm. The width of the spiral belt layer of Conventional Example, Examples 1 to 8, and Comparative Examples 1 and 3 is 240 mm, whereas that of Comparative Example 2 and Example 9 is 180 mm. The width of the radial belt layer is 240 mm.

The basic structure of the above-listed tires is shared by all.

The differences in the tread rubber are as described below:

### Tire of Conventional Example 1:

A rubber 140 mm wide and 3 mm thick whose tan δ is 0.2 at 100°C is disposed inside the tread layer in the center region, and a high-loss rubber whose tan δ is 0.4 at 100°C is disposed in the other parts thereof.

### Tire of Example 1:

A dissimilar rubber having a smaller tan δ than that of the high-loss rubber is disposed inside the tread edge in each of the left and right shoulders. The tan δ of the left-side rubber is 0.2, and the tan δ of the right-side rubber is 0.3. The width (Wl = W2) of the dissimilar rubbers is 60 mm (25% of the extended tread width). The position of the end of the dissimilar rubbers on the tread edge side (L11 = L21) is 20 mm (8% of the extended tread width). At this time, the position of the end of the dissimilar rubbers on the tread center side (L12 = L22 = L11 + W1) is 80 mm. Also, the thickness (D1 = D2) of the dissimilar rubbers is 4 mm (57% of the thickness of the tread layer). The boundary in the depth direction between the dissimilar rubber and the rubber closer to the center is substantially vertical in the depth direction without any inclination (see FIG. 3A).

The tire of Example 2 is the same as the tire of Example 1 except that the tan δ of the left-side rubber and that of the right-side rubber are both 0.25 and the thicknesses of the left and right dissimilar rubber layers are 5.5 mm and 3 mm, respectively.

The tire of Example 3 is the same as the tire of Example 1 except that the tan δ of the left-side rubber and that of the right-side rubber are both 0.25 and the widths of the left and right dissimilar rubber layers are 70 mm and 50 mm, respectively.

The tire of Example 4, which is included herein for context but not part of the claimed invention, has the dissimilar rubber layer on the left side only, and the tan δ is 0.25. The width of the left dissimilar rubber layer is 60 mm, and the thickness thereof is 4 mm.

The tire of Example 5 is the same as the tire of Example 1 except that, as shown in FIG. 3B, the end of the left dissimilar rubber layer on the center region side extends in the direction of the center region and is joined with the middle dissimilar rubber layer.

The tire of Example 6 has the rubber of the middle dissimilar rubber layer stretching toward the left tread edge side such that it extends into the underside of the left dissimilar rubber layer as shown in FIG. 3C, and also has the same tan δ of 0.3 for both the left and right dissimilar rubber layers.

The tire of Example 7 is the same as the tire of Example 1 except that, as shown in FIG. 3D, a hard rubber having a Shore A hardness of 70 at 100°C is disposed in the wall of the tread edge of Example 1.

The tire of Example 8 is the same as the tire of Example 1 except that the average thickness of the rubber in the range of 10% from the tread edge of Example 1 is 0.7 mm thinner.

The tire of Example 9 is the same as the tire of Example 1 except that the width of the spiral belt layer of Example 1 is changed to 180 mm, and further a shock-absorbing rubber is disposed between the spiral belt layer and the radial belt layer.

The tire of Comparative Example 1 is the same as the tire of Example 1 except that the tan δ is 0.25 for both the left- and right-side rubbers.

The tire of Comparative Example 2 is the same as the tire of Conventional Example except that the width of the spiral belt layer of Conventional Example is changed to 180 mm.

The tire of Comparative Example 3 is the same as the tire of Conventional Example except that a shock-absorbing rubber is disposed between the spiral belt layer and the radial belt layer of the tire of Conventional Example.

The following measurements and evaluations have been carried out on the respective tires as described above.

### (1) Measurement of lateral forces at a CA of 50 degrees and measurement of shoulder temperatures at the drum.

The tire fitted on a wheel of 6-inch rim width and 17-inch rim diameter was pressed against a steel drum of 3 m diameter with a #40 sandpaper affixed to the surface thereof, at a camber angle (CA) of 50 degrees, a load of 1500 N, and a slip angle (SA) of 0 degrees. And the tire was rotated at a speed of 100 km per hour, and the lateral force then was measured with a three-force-component gauge/dynamometer mounted on the axis of rotation of the tire. This lateral force is the camber thrust. Note that the internal pressure of the tire was 240 kPa.

The lateral force was measured five minutes after the start of tire rotation. At that time, the tire was sufficiently heated up, and the temperature of the shoulder region was 100°C.

The lateral force was measured for each of the left-side tread and the right-side tread. That is, the measurement was taken at a camber angle of 50 degrees on the left and on the right. The lateral forces of the tires of Conventional Example were all 1700 N. The lateral forces of the other tires were represented by indexes in relation to the lateral force of the Conventional Example tire as 100.

### (2) Evaluations on the test course

A comprehensive steering stability performance test was conducted with the help of a skilled driver on a test course . Rear tires were prepared, and actual vehicle tests were performed by exchanging the rear tires only. Note that a conventional tire was used constantly as the front tire.

The tires were put on a sport utility two-wheeled vehicle of 1000 cc, and the vehicle was driven on the test course. The evaluation was made with emphasis on the steering performance at cornering (cornering performance) with the vehicle at a considerable tilt. The rating was done comprehensively on a scale of one-to-ten based on the feeling of the test rider. The rating by the test rider was done for each of right-hand cornering and left-hand cornering.

The test course used was Circuit B which had more left-hand cornerings as shown in FIG. 6. The lap time was about 130 seconds, and six laps were done. The average of the lap times when the six laps of the circuit were completed was also recorded.

Also, the temperatures in the left and right shoulder regions right after the test run were measured as the shoulder temperatures after the actual vehicle run.

### (3) Evaluation of the amount of wear

The weight of the tire was measured before starting the actual vehicle test, and after eight laps were done on the test course, the weight of the tire was measured again after removing all extraneous matter, such as rubber and stone chips, adhering to the tire. At this time, the tire was cut along the equator in the tread center region into the left half and the right half thereof, and the weight of the right half and the weight of the left half were measured respectively. The amounts of wear on the left and right sides were determined by subtracting the weight of the left-half and the right-half tire, respectively, after the run from a half of the weight of a new tire. As the test course had many corners, there were concentrations of wear in the shoulder regions. Therefore, the differences in weight of tires after the run in relation to the new tire were evaluated as the amounts of wear in the shoulder regions of the tires. The amounts of wear of the respective tires were represented by indexes relative to the amount of wear on the right side of the Conventional Example tire as 100.

The advantageous effects of the present invention are evident from the results of the tests as described above.

From a comparison of the results of Example 1 with the results of Conventional Example 1 and Comparative Example 1, it can be seen that the lateral force index at the drum is better (improved) in Example 1 and Comparative Example 1, in which dissimilar rubber layers of a small tan δ are disposed inside the shoulder regions, than in Conventional Example 1. Also, from the shorter lap times on the test course, it has been confirmed that there is also an improvement in the grip on the circuit. Further, there is a reduction in the amount of wear on the more frequently used left side, and the temperatures in the shoulder regions after the run are lower.

With Comparative Example 1, however, the rating score remained low despite reduced differences in steering performance between left-hand and right-hand cornerings. And besides the imbalance of the left and right amounts of wear was not eliminated, and there is much temperature difference between the left and right shoulder regions after the run. In contrast to that, with Example 1, in which the tan δ of the internal rubber on the left is smaller than that on the right, there is an improvement in the balance of the steering performance between left-hand and right-hand cornerings, and the lap time is shorter than that of Comparative Example 1. Therefore, it has been confirmed that there is a further improvement in the grip on the circuit. Moreover, the balance of the left and right amounts of wear is satisfactory, and there is only a smaller temperature difference between the left and right shoulder regions after the run.

Also, with Example 1, the temperature in the left shoulder region, which is the more frequently used side, after the run is 111°C, or lower than that of Comparative Example 1. This is because the amount of heat generation is controlled by the use of a smaller tan δ on the left with the result that no softening of the rubber happens and thus the grip is retained. However, with Example 1, the temperature in the right shoulder region, which is the less frequently used side, after the run is 90°C, or higher than that of Comparative Example 1. This is presumably because the tan δ on the less frequently used right side is larger than that of Comparative Example 1 and thus the rubber heats up more easily and a sufficient grip is secured.

Thus, it has been confirmed that not only the steering performance at cornering can be enhanced, but also the difference in the amount of wear between the left side and the right side can be reduced by the disposition of rubbers of small tan δ inside the left and right shoulder regions, respectively, and further by the use of a smaller tan δ on the more frequently used side than that on the less frequently used side.

From a comparison of the results of Example 2 with the results of Conventional Example 1 and Comparative Example 1, it can be seen that the use of different thicknesses for the left and right dissimilar rubber layers can also achieve a similar effect to that when different values of tan δ are used therefor.

Also, from a comparison of the results of Example 3 with the results of Conventional Example 1 and Comparative Example 1, it can be seen that the use of different widths for the left and right dissimilar rubber layers can also achieve a similar effect to that when different values of tan δ are used therefor.

Further, from a comparison of the results of Example 4 with the results of Conventional Example 1 and Comparative Example 1, it has been confirmed that even when a dissimilar rubber layer is disposed only on the more frequently used left side, not only the steering performance at cornering can be enhanced, but also the difference in the amount of wear between the left side and the right side can be reduced. The tire of Example 4 has an advantage of easier manufacture than the tires of Examples 1 to 3, although it shows a little inferior steering performance at cornering on the right side thereof where the rubber of a small tan δ is not disposed. However, it is considered useful on the circuit where there can be a great difference in the frequency of use between the left side and the right side of the tire.

Note that Example 5 is of a structure such that the rubber which has a small tan δ (tan δ = 0.2) and does not heat up easily is located inside in the tread center region and is reaching the tire shoulder region on the left side only. With the rubber which does not heat up easily disposed inside, it is evident that, unlike the case of Example 1, the temperature of the whole area of the tread from center region to shoulder region does not rise too high and remains at proper temperatures even after repeated runs. Accordingly, stable lap times were measured even in the latter half of the circuit runs. The average lap time of six laps was shorter than that of Example 1.

Example 6 and Example 5 are of identical structure except that the tan δ of the rubber of the left dissimilar rubber layer in the shoulder region of Example 6 is slightly larger than that of Example 5. According to a comment by a test rider, the initial grip of Example 6 was a little inferior to that of Example 5, but the grip of Example 6 improved as the tread became worn and thinner and the performance improved even further in the latter half of the circuit runs. This indicates that Example 6 has a slightly inferior effect of the rubber of a small tan δ in the shoulder region, and thus the effect of controlling the temperature is a little weak initially, but it can repress the tendency for the tread temperature to drop too low later when the wear has progressed. It has been confirmed therefore that Example 6 has an appropriate constitution that can retain the worn tread at proper temperatures.

A comparison of the results of Example 7 with the results of Example 1 indicates that Example 7, which has a hard rubber disposed in the tread edge, displays not only an improved lateral force index at the drum but also an improved rating on the circuit track. From this, the effect of disposing a hard rubber in the tread edge has been confirmed.

Also, from a comparison of the results of Example 8 with the results of Example 1, it can be seen that Example 8 exhibits better steering stability on the test course on account of improved lateral force characteristic at the drum. Thus, it has been confirmed that the use of a thinner thickness for the surface rubber at the tread edge with the thickness of the dissimilar rubber remaining the same will not only raise the rigidity in that part but also increases the ratio of the dissimilar rubber there, so that the temperature rise in the shoulder region can be controlled and the lateral force and steering stability characteristics can be improved.

From a comparison of the results of Example 9 with the results of Example 1, it can be seen that there are improvements with Example 9 in all of drum lateral force, lap time, steering stability, and amount of wear. Also, there is a reduction in the temperature difference between the left and right shoulder regions after the runs. As for the amount of wear on the left, there are improvements by 30 points of index (Conventional Example vs. Comparative Example 2) by just narrowing the width of the spiral belt layer, 20 points (Conventional Example vs. Comparative Example 3) by just disposing the shock-absorbing layer, and 80 points (Conventional Example vs. Comparative Example 1) by just disposing the rubber of a small tanδ. By simply adding these together, there is an improvement of 130 points of index. In particular, a comparison of Conventional Example with Example 9 indicates an improvement in the amount of wear by 180 points of index. It is considered that these improvements were achieved not simply by narrowing the width of the spiral belt layer or by disposing the shock-absorbing layer, but by their combined effects. Example 9 displays not only very good lap time and very small amount of wear but also lower temperatures in the shoulder regions and smaller temperature differences between the left side and the right side.

### INDUSTRIAL APPLICABILITY

As described above, a pneumatic tire for a two-wheeled vehicle according to the present invention can improve lateral grip at cornering, control tread wear in the shoulder regions, and ensure uniformity of wear on the left and the right. Also, it can secure proper heating of the tread on an actual vehicle, thus providing excellent steering stability and abrasion resistance. In addition, the tire of the present invention is particularly suited as a pneumatic tire for a two-wheeled vehicle used on the circuit track where the frequency of use is different between the left side and the right side of the tire.

## Claims

1. A pneumatic tire (10) for a two-wheeled vehicle, comprising a belt layer (14) and a tread rubber disposed radially outward of the belt layer, **characterised in that**
the tread rubber comprises:
a surface layer (15a) disposed on the tire surface,
a first side dissimilar rubber layer (15b) being provided on a first side of the tire (10) and disposed in a radially inward position in the surface layer of one of the left and right shoulder regions (16),
a second side dissimilar rubber layer (15c) disposed in a radially inward position in the surface layer of the other of the left and right shoulder regions (16),
a middle dissimilar rubber layer (15d) disposed in a radially inward position in the surface layer in a centre region (17) of the tire (10), and
and intermediate layer (15m) disposed radially inward of the surface layer (15a) between the first dissimilar rubber layer (15b) and the middle dissimilar rubber layer (15d) and between the second dissimilar rubber layer (15c) and the middle dissimilar rubber layer (15d),
wherein the width (W1) of the first side dissimilar rubber layer (15b) and the width (W2) of the second side dissimilar rubber layer (15c) are within a range of 5% to 25% of the extended tread width,
wherein the position of an end of the first side dissimilar rubber layer (15b) on the tread edge side (15z) and the position of an end of the second side dissimilar rubber layer (15c) on the tread edge side (15z) are within a range of 5% to 14% of the extended tread width as measured from the tread edge,
wherein the position of an end of the first side dissimilar rubber layer (15b) on the tread center side and the position of an end of the second side dissimilar rubber layer (15c) on the tread center side is within a range of 15% to 30% of the extended tread width as measured from the tread edge,
wherein the loss tangent of the first side dissimilar rubber layer (15b) and of the second side dissimilar rubber layer (15c) is smaller than the loss tangent of the rubber of the surface layer (15a), and
wherein the loss tangent of the rubber of the second side dissimilar rubber layer (15c) is larger than the loss tangent of the rubber of the first side dissimilar rubber layer (15b) or the thickness or the width of the second side dissimilar rubber layer (15c) is smaller than the thickness, or width, respectively, of the first side dissimilar rubber layer (15b).

2. The pneumatic tire (10) for a two-wheeled vehicle according to claim 1, wherein the first side dissimilar rubber layer (15b) and the second side dissimilar rubber layer (15c) are located in a region where the tread rubber is disposed.

3. The pneumatic tire (10) for a two-wheeled vehicle according to claim 1 or claim 2, wherein the thickness (D1) of the first side dissimilar rubber layer (15b) and the thickness (D2) of the second side dissimilar rubber layer (15c) is within a range of 20% to 70% of the thickness of the tread rubber.

4. The pneumatic tire (10) for a two-wheeled vehicle according to any of claims 1 to 3, wherein an average thickness of the tread rubber between the tread edge and a position 10% of the extended tread width as measured from the tread edge is thinner than an average thickness of the tread rubber between positions 10% and 25% of the extended tread width as measured from the tread edge.

5. The pneumatic tire (10) for a two-wheeled vehicle according to any of claims 1 to 4, wherein a plurality of rubber layers are stacked radially in the tread center region and the loss tangent of the rubber of at least one of the internal rubber layers is smaller than the loss tangent of the rubber of a rubber layer disposed on the tread surface.

6. The pneumatic tire (10) for a two-wheeled vehicle according to claim 5, wherein the rubber disposed on the tread surface in the tread center region and the rubber adjacent to the tire surface side of one or both of the dissimilar rubber layers (15b, 15c) are continuously joined with each other.

7. The pneumatic tire (10) for a two-wheeled vehicle according to claim 5 or claim 6, wherein an innermost rubber layer (15d) in the tread center region extends to the tread edge side, and the extending portion thereof is disposed radially inwardly adjacent to one or both of the dissimilar rubber layers (15b, 15c).

8. The pneumatic tire (10) for a two-wheeled vehicle according to claim 7, wherein the rubber of the innermost rubber layer(s) in the tread center region is the same as the rubber of the dissimilar rubber layer and the innermost rubber layer and the dissimilar rubber layer(s) are continuously joined with each other.

9. The pneumatic tire (10) for a two-wheeled vehicle according to any of claims 1 to 8, wherein a hard rubber 6 mm or less in width is disposed in at least a part of the wall of the tread edge.

10. The pneumatic tire (10) for a two-wheeled vehicle according to any of claims 1 to 9, wherein at least a part of the tread rubber is molded with narrow and long rubber strips wrapped in spiral layers along the circumferential direction of the tire.

11. The pneumatic tire (10) for a two-wheeled vehicle according to any of claims 1 to 10, further comprising a spiral belt layer (13) in which reinforcement members are arranged at an angle of 0 degrees to 5 degrees with respect to the equatorial direction of the tire (10).

12. The pneumatic tire (10) for a two-wheeled vehicle according to claim 11, wherein a belt layer (14) in which reinforcement members are arranged at an angle of 80 degrees to 90 degrees with respect to the equatorial direction of the tire (10) is disposed radially outward of the spiral belt layer.

13. The pneumatic tire (10) for a two-wheeled vehicle according to claim 12, wherein a shock-absorbing rubber layer 0.3 mm to 3.0 mm in thickness is disposed between the spiral belt layer (13) and the belt layer (14).

14. The pneumatic tire (10) for a two-wheeled vehicle according to any of claims 11 to 13, wherein the width of the spiral belt layer (13) is 60% to 90% of the extended tread width.

## Patentansprüche

1. Luftreifen (10) für ein zweirädriges Fahrzeug, der eine Gürtellage (14) und einen Laufflächengummi aufweist, der radial nach außen von der Gürtellage angeordnet ist, **dadurch gekennzeichnet, dass** der Laufflächengummi aufweist:
eine Oberflächenlage (15a), die auf der Reifenoberfläche angeordnet ist;
eine unterschiedliche Gummilage (15b) auf der ersten Seite, die auf einer ersten Seite des Reifens (10) vorhanden und in einer radial inneren Position in der Oberflächenlage von einem von linkem und rechtem Schulterbereich (16) angeordnet ist;
eine unterschiedliche Gummilage (15c) auf der zweiten Seite, die in einer radial inneren Position in der Oberflächenlage des anderen von linkem und rechtem Schulterbereich (16) angeordnet ist;
eine mittlere unterschiedliche Gummilage (15d), die in einer radial inneren Position in der Oberflächenlage in einem mittleren Bereich (17) des Reifens (10) angeordnet ist; und
eine Zwischenlage (15m), die radial innen von der Oberflächenlage (15a) zwischen der ersten unterschiedlichen Gummilage (15b) und der mittleren unterschiedlichen Gummilage (15d) und zwischen der zweiten unterschiedlichen Gummilage (15c) und der mittleren unterschiedlichen Gummilage (15d) angeordnet ist,
wobei die Breite (W1) der unterschiedlichen Gummilage (15b) auf der ersten Seite und die Breite (W2) der unterschiedlichen Gummilage (15c) auf der zweiten Seite innerhalb eines Bereiches von 5 % bis 25 % der erweiterten Laufflächenbreite liegen,
wobei die Position eines Endes der unterschiedlichen Gummilage (15b) auf der ersten Seite auf der Seite der Laufflächenkante (15z) und die Position eines Endes der unterschiedlichen Gummilage (15c) auf der zweiten Seite auf der Seite der Laufflächenkante (15z) innerhalb eines Bereiches von 5 % bis 14 % der erweiterten Laufflächenbreite liegen, gemessen von der Laufflächenkante,
wobei die Position eines Endes der unterschiedlichen Gummilage (15b) auf der ersten Seite auf der Seite der Laufflächenmitte und die Position eines Endes der unterschiedlichen Gummilage (15c) auf der zweiten Seite auf der Seite der Laufflächenmitte innerhalb eines Bereiches von 15 % bis 30 % der erweiterten Laufflächenbreite liegen, gemessen von der Laufflächenkante,
wobei die Verlusttangente der unterschiedlichen Gummilage (15b) auf der ersten Seite und der unterschiedlichen Gummilage (15c) auf der zweiten Seite kleiner ist als die Verlusttangente des Gummis der Oberflächenlage (15a), und
wobei die Verlusttangente des Gummis der unterschiedlichen Gummilage (15c) auf der zweiten Seite größer ist als die Verlusttangente des Gummis der unterschiedlichen Gummilage (15b) auf der ersten Seite, oder wobei die Dicke oder die Breite der unterschiedlichen Gummilage (15c) auf der zweiten Seite kleiner ist als jeweils die Dicke oder die Breite der unterschiedlichen Gummilage (15b) auf der ersten Seite.

2. Luftreifen (10) für ein zweirädriges Fahrzeug nach Anspruch 1, bei dem die unterschiedliche Gummilage (15b) auf der ersten Seite und die unterschiedliche Gummilage (15c) auf der zweiten Seite in einem Bereich angeordnet sind, wo der Laufflächengummi angeordnet ist.

3. Luftreifen (10) für ein zweirädriges Fahrzeug nach Anspruch 1 oder Anspruch 2, bei dem die Dicke (D1) der unterschiedlichen Gummilage (15b) auf der ersten Seite und die Dicke (D2) der unterschiedlichen Gummilage (15c) auf der zweiten Seite innerhalb eines Bereiches von 20 % bis 70 % der Dicke des Laufflächengummis liegen.

4. Luftreifen (10) für ein zweirädriges Fahrzeug nach einem der Ansprüche 1 bis 3, bei dem eine mittlere Dicke des Laufflächengummis zwischen der Laufflächenkante und einer Position 10 % von der erweiterten Laufflächenbreite, gemessen von der Laufflächenkante, dünner ist als eine mittlere Dicke des Laufflächengummis zwischen den Positionen 10 % und 25 % der erweiterten Laufflächenbreite, gemessen von der Laufflächenkante.

5. Luftreifen (10) für ein zweirädriges Fahrzeug nach einem der Ansprüche 1 bis 4, bei dem eine Vielzahl von Gummilagen radial im mittleren Bereich der Lauffläche gestapelt wird, und wobei die Verlusttangente des Gummis von mindestens einer der inneren Gummilagen kleiner ist als die Verlusttangente des Gummis einer Gummilage, die auf der Lauffläche angeordnet ist.

6. Luftreifen (10) für ein zweirädriges Fahrzeug nach Anspruch 5, bei dem der auf der Lauffläche im mittleren Bereich der Lauffläche angeordnete Gummi und der Gummi benachbart der Reifenoberflächenseite von einer oder beiden der unterschiedlichen Gummilagen (15b, 15c) kontinuierlich miteinander verbunden sind.

7. Luftreifen (10) für ein zweirädriges Fahrzeug nach Anspruch 5 oder Anspruch 6, bei dem sich die innerste Gummilage (15d) im mittleren Bereich der Lauffläche bis zur Seite der Laufflächenkante erstreckt, und wobei der sich erstreckende Abschnitt davon radial nach innen benachbart einer oder beiden der unterschiedlichen Gummilagen (15b, 15c) angeordnet ist.

8. Luftreifen (10) für ein zweirädriges Fahrzeug nach Anspruch 7, bei dem der Gummi der innersten Gummilage(n) im mittleren Bereich der Lauffläche der gleiche ist wie der Gummi der unterschiedlichen Gummilage und die innerste Gummilage und die unterschiedliche(n) Gummilage(n) kontinuierlich miteinander verbunden sind.

9. Luftreifen (10) für ein zweirädriges Fahrzeug nach einem der Ansprüche 1 bis 8, bei dem ein Hartgummi, 6 mm oder weniger breit, in mindestens einem Teil der Wand der Laufflächenkante angeordnet ist.

10. Luftreifen (10) für ein zweirädriges Fahrzeug nach einem der Ansprüche 1 bis 9, bei dem mindestens ein Teil des Laufflächengummis mit schmalen und langen Gummistreifen geformt wird, die in spiralförmigen Lagen entlang der Umfangsrichtung des Reifens gewickelt sind.

11. Luftreifen (10) für ein zweirädriges Fahrzeug nach einem der Ansprüche 1 bis 10, der außerdem eine spiralförmige Gürtellage (13) aufweist, in der Verstärkungselemente unter einem Winkel von 0 Grad bis 5 Grad mit Bezugnahme auf die Äquatorrichtung des Reifens (10) angeordnet sind.

12. Luftreifen (10) für ein zweirädriges Fahrzeug nach Anspruch 11, bei dem eine Gürtellage (14), in der Verstärkungselemente unter einem Winkel von 80 Grad bis 90 Grad mit Bezugnahme auf die Äquatorrichtung des Reifens (10) angeordnet sind, radial nach außen von der spiralförmigen Gürtellage angeordnet ist.

13. Luftreifen (10) für ein zweirädriges Fahrzeug nach Anspruch 12, bei dem eine stoßdämpfende Gummilage, 0,3 mm bis 3,0 mm dick, zwischen der spiralförmigen Gürtellage (13) und der Gürtellage (14) angeordnet ist.

14. Luftreifen (10) für ein zweirädriges Fahrzeug nach einem der Ansprüche 11 bis 13, bei dem die Breite der spiralförmigen Gürtellage (13) 60 % bis 90 % der erweiterten Laufflächenbreite beträgt.

## Revendications

1. Bandage pneumatique (10) pour un véhicule à deux roues, comprenant une couche de ceinture (14) et une gomme de bande de roulement agencée radialement vers l'extérieur de la couche de ceinture, **caractérisé en ce que** la gomme de bande de roulement comprend :
une couche de surface (15a) agencée sur la surface du bandage pneumatique ;
une couche de caoutchouc dissimilaire du premier côté (15b) étant disposée sur un premier côté du bandage pneumatique (10) et étant agencée dans une position orientée radialement vers l'intérieur dans la couche de surface dans l'une des régions d'épaulement de gauche et de droite (16) ;
une couche de caoutchouc dissimilaire du deuxième côté (15c), agencée dans une position orientée radialement vers l'intérieur dans la couche de surface de l'autre des régions d'épaulement de gauche et de droite (16) ;
une couche de caoutchouc dissimilaire centrale (15d) agencée dans une position orientée radialement vers l'intérieur dans la couche de surface, dans une région centrale (17) du bandage pneumatique (10) ; et
une couche intermédiaire (15m), agencée radialement vers l'intérieur de la couche de surface (15a), entre la première couche de caoutchouc dissimilaire (15b) et la couche de caoutchouc dissimilaire centrale (15d), et entre la deuxième couche de caoutchouc dissimilaire (15c) et la couche de caoutchouc dissimilaire centrale (15d) ;
dans lequel la largeur (W1) de la couche de caoutchouc dissimilaire du premier côté (15b) et la largeur (W2) de la couche de caoutchouc dissimilaire du deuxième côté (15c) sont comprises dans un intervalle représentant 5% à 25% de la largeur de la bande de roulement étendue ;
dans lequel la position d'une extrémité de la couche de caoutchouc dissimilaire du premier côté (15b) sur le côté du bord de la bande de roulement (15z) et la position d'une extrémité de la couche de caoutchouc dissimilaire du deuxième côté (15c) sur le côté du bord de la bande de roulement (15z) sont comprises dans un intervalle représentant 5% à 14% de la largeur de la bande de roulement étendue, mesurée à partir du bord de la bande de roulement ;
dans lequel la position d'une extrémité de la couche de caoutchouc dissimilaire du premier côté (15b) sur le côté du centre de la bande de roulement, et la position d'une extrémité de la couche de caoutchouc dissimilaire du deuxième côté (15c) sur le côté du centre de la bande de roulement sont comprises dans un intervalle représentant 15% à 30% de la largeur de la bande de roulement étendue, mesurée à partir du bord de la bande de roulement ;
dans lequel la tangente de l'angle des pertes de la couche de caoutchouc dissimilaire du premier côté (15b) et de la couche de caoutchouc dissimilaire du deuxième côté (15c) est inférieure à la tangente de l'angle des pertes du caoutchouc de la couche de surface (15a) ; et
dans lequel la tangente de l'angle des pertes du caoutchouc de la couche de caoutchouc dissimilaire du deuxième côté (15c) est supérieure à la tangente de l'angle des pertes du caoutchouc de la couche de caoutchouc dissimilaire du premier côté (15b), ou dans lequel l'épaisseur ou la largeur de la couche de caoutchouc dissimilaire du deuxième côté (15c) est respectivement inférieure à l'épaisseur, ou à la largeur, de la couche de caoutchouc dissimilaire du premier côté (15b).

2. Bandage pneumatique (10) pour un véhicule à deux roues selon la revendication 1, dans lequel la couche de caoutchouc dissimilaire du premier côté (15b) et la couche de caoutchouc dissimilaire du deuxième côté (15c) sont agencées dans une région dans laquelle est agencée la gomme de bande de roulement.

3. Bandage pneumatique (10) pour un véhicule à deux roues selon les revendications 1 ou 2, dans lequel l'épaisseur (D1) de la couche de caoutchouc dissimilaire du premier côté (15b) et l'épaisseur (D2) de la couche de caoutchouc dissimilaire du deuxième côté (15c) sont comprises dans un intervalle représentant 20% à 70% de l'épaisseur de la gomme de bande de roulement.

4. Bandage pneumatique (10) pour un véhicule à deux roues selon l'une quelconque des revendications 1 à 3, dans lequel une épaisseur moyenne de la gomme de bande de roulement, entre le bord de la bande de roulement et une position correspondant à 10% de la largeur de la bande de roulement étendue, mesurée à partir du bord de la bande de roulement, est inférieure à une épaisseur moyenne de la gomme de bande de roulement entre des positions correspondant à 10% et 25% de la largeur étendue de la bande de roulement, mesurée à partir du bord de la bande de roulement ;

5. Bandage pneumatique (10) pour un véhicule à deux roues selon l'une quelconque des revendications 1 à 4, dans lequel plusieurs couches de caoutchouc sont empilées radialement dans la région centrale de la bande de roulement, la tangente de l'angle des pertes du caoutchouc d'au moins une des couches de caoutchouc internes étant inférieure à la tangente de l'angle des pertes du caoutchouc d'une couche de caoutchouc agencée sur la surface de la bande de roulement.

6. Bandage pneumatique (10) pour un véhicule à deux roues selon la revendication 5, dans lequel le caoutchouc agencé sur la surface de la bande de roulement dans la région centrale de la bande de roulement, et le caoutchouc adjacent au côté de la surface du bandage pneumatique de l'une des couches de caoutchouc dissimilaires (15b, 15c), ou de ces deux couches, sont reliés de manière continue l'un à l'autre.

7. Bandage pneumatique (10) pour un véhicule à deux roues selon les revendications 5 ou 6, dans lequel une couche de caoutchouc interne extrême (15d) dans la région centrale de la bande de roulement s'étend vers le côté du bord de la bande de roulement, la partie d'extension de celle-ci étant agencée radialement vers l'intérieur, en un point adjacent à l'une des couches de caoutchouc dissimilaires (15b, 15c) ou à ces deux couches.

8. Bandage pneumatique (10) pour un véhicule à deux roues selon la revendication 7, dans lequel le caoutchouc de (s) couche(s) de caoutchouc interne(s) extrême(s) dans la région centrale de la bande de roulement est identique au caoutchouc de la couche de caoutchouc dissimilaire, la couche de caoutchouc interne extrême et la (les) couche(s) de caoutchouc dissimilaire(s) étant reliées de manière continue l'une à l'autre.

9. Bandage pneumatique (10) pour un véhicule à deux roues selon l'une quelconque des revendications 1 à 8, dans lequel un caoutchouc dur ayant une largeur de 6 mm ou moins est agencé dans au moins une partie de la paroi du bord de la bande de roulement.

10. Bandage pneumatique (10) pour un véhicule à deux roues selon l'une quelconque des revendications 1 à 9, dans lequel au moins une partie de la gomme de bande de roulement est moulée avec des bandes de caoutchouc étroites et longues enroulées en des couches en spirale le long de la direction circonférentielle du bandage pneumatique.

11. Bandage pneumatique (10) pour un véhicule à deux roues selon l'une quelconque des revendications 1 à 10, comprenant en outre une couche de ceinture en spirale (13), dans laquelle des éléments de renforcement sont agencés à un angle compris entre 0 degré et 5 degrés par rapport à la direction équatoriale du bandage pneumatique (10).

12. Bandage pneumatique (10) pour un véhicule à deux roues selon la revendication 11, dans lequel une couche de ceinture (14), dans laquelle des éléments de renforcement sont agencés à un angle compris entre 80 degrés et 90 degrés par rapport à la direction équatoriale du bandage pneumatique (10), est agencée radialement vers l'extérieur de la couche de ceinture en spirale.

13. Bandage pneumatique (10) pour un véhicule à deux roues selon la revendication 12, dans lequel une couche de caoutchouc à absorption des chocs, ayant une épaisseur comprise entre 0,3 mm et 3,0 mm, est agencée entre la couche de ceinture en spirale (13) et la couche de ceinture (14).

14. Bandage pneumatique (10) pour un véhicule à deux roues selon l'une quelconque des revendications 11 à 13, dans lequel la largeur de la couche de ceinture en spirale (13) représente 60% à 90% de la largeur de la bande de roulement étendue.
